(19) Europäisches Patentamt
European Patent Office
Office européen des brevets

(11) EP 3 351 581 A1

(12) **EUROPEAN PATENT APPLICATION**

(43) Date of publication:
**25.07.2018 Bulletin 2018/30**

(51) Int Cl.:
***C08G 69/48*** *(2006.01)* ***C08G 69/36*** *(2006.01)*

(21) Application number: **18152272.3**

(22) Date of filing: **18.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **18.01.2017 EP 17305054**

(71) Applicant: **SABIC Global Technologies B.V.**
**4612 PX Bergen op Zoom (NL)**

(72) Inventors:
- **GROOTE, Ramon**
  **5063 EC OISTERWIJK (NL)**
- **BAUS, Mathilde**
  **93600 AULNAY-SOUS-BOIS (FR)**
- **GOOSSENS, Johannes Gerardus Petrus**
  **5473 RW HEESWIJK-DINTHER (NL)**

(74) Representative: **Balder IP Law, S.L.**
**Paseo de la Castellana 93**
**5ª planta**
**28046 Madrid (ES)**

(54) **DYNAMICALLY CROSS-LINKED POLY (AMIDES) PREPARED VIA THE INCORPORATION OF POLYAMINES/AMMONIUM SALTS IN THE SOLID STATE**

(57) Provided are methods for preparing polymer compositions by combining a polyamine/ammonium salt component, a polyamide component, and, optionally, a transamidation catalyst, as well as polymer compositions prepared according to the described methods.

EP 3 351 581 A1

## Description

### FIELD

The present disclosure relates to methods for preparing a polymer composition by solid-state modification, and in particular to methods for preparing a polymer composition by combining a polyamine/ammonium salt component, a polyamide component, and, optionally, a transamidation catalyst.

### BACKGROUND

"Dynamic cross-linked polymer compositions" (or DCNs) represent a versatile class of polymers. The compositions feature a system of covalently cross-linked polymer networks and can be characterized by the nature of their structure. At elevated temperatures, the cross-links undergo rearrangement reactions at such a rate that a flow-like behavior can be observed. Here, the polymer can be processed much like a viscoelastic thermoplastic. At lower temperatures, these dynamic cross-linked polymer compositions behave more like classical thermosets. As the rate of inter-chain rearrangement reactions slows down, the network becomes more rigid. The dynamic nature of their cross-links allows these polymers to be heated, reheated, and reformed, as the polymers maintain structural integrity under demanding conditions. A variety of materials have been evaluated for use as in DCNs, particularly poly(alkylene terephthalates); the comparatively high crystallization rate of poly(alkylene terephthalates) makes them especially suitable for injection molding and other applications, but these materials may in some cases have inferior dimensional stability, thermal resistance, mechanical resistance, and environmental resistance as compared to cross-linked thermosets. Poly(amides) are another important engineering thermoplastics that have similar characteristics, such as a high crystallization rate and good mechanical properties such as high durability and strength, but at the same time they may also have inferior dimensional stability, thermal resistance, mechanical resistance, and environmental resistance as compared to cross-linked thermosets. Accordingly there is a long-felt need in the art for improved poly(amides) and methods of making them.

### SUMMARY

The above-described and other deficiencies of the art are met by the methods of the disclosure. In one aspect, the present disclosure provides methods of forming a polymer composition by solid-state modification, comprising: forming a solid solution that comprises a polyamide component and one or more of (a) a polyammonium salt, (b) a polyamine, (c) a polyacid, or (d) a polycarboxylate salt; polymerizing the polyamide component and the one or more of (a) a polyammonium salt, (b) a polyamine, (c) a polyacid, or (d) a polycarboxylate salt, so as to form polyamide polymer chains and to form cross-links among the polyamide polymer chains so as to give rise to a pre-dynamically cross-linked network polymer composition having at one or more of an amorphous polyamide region and a crystalline polyamide region.

Also provided are methods of forming a polymer composition by solid-state modification, comprising: forming a solution that comprises: a polyamide component and one or more of (a) a polyammonium salt, (b) a polyamine, (c) a polyacid, or (d) a polycarboxylate salt, and optionally a transamidation catalyst, forming, from the solution, a solid that comprises an amount of the polyamide in at least partially crystalline particulate form, the (a) a polyammonium salt, (b) a polyamine, (c) a polyacid, or (d) a polycarboxylate salt and the optional transamidation catalyst; heating the solid at a temperature between the glass transition temperature ($T_g$) and melting temperature ($T_m$) of the at least partially crystalline particulate polyamide so as to form a pre-dynamically cross-linked network polymer composition.

Further disclosed are dynamically cross-linked network polymer compositions, comprising: a polyamide that comprises a plurality of crystalline regions bound to amorphous regions, at least some of the amorphous regions being cross-linked by cross-links that comprise a reacted (a) polyammonium salt, (b) polyamine, (c) polyacid, or (d) polycarboxylate salt component.

Also provided are compositions, comprising: in solid form, an at least partially crystalline polyamide in particulate form, a polyammonium salt comprising at least three amine groups, and an optional transamidation catalyst.

Further disclosed are compositions, comprising: a dynamically cross-linked copolymer that comprises repeat units of a polyamide, the repeat units being crosslinked by the reaction product of (a) a polyammonium salt, (b) a polyamine, (c) a polyacid, or (d) a polycarboxylate salt with the polyamide.

### BRIEF DESCRIPTION OF THE DRAWINGS

FIG. 1 depicts the storage (solid line) and loss (dashed line) modulus of the oscillatory time sweep measurement

curves for a cross-linked polymer network.

FIG. 2 depicts the normalized modulus ($G/G_0$) for the dynamically cross-linked polymer network (solid line), as well as a line representing the absence of stress relaxation in a conventionally cross-linked polymer network (dashed line, fictive data).

FIG. 3 depicts storage modulus as a function of temperature according to a dynamic mechanical analysis (DMA) for several exemplary compositions formed.

FIG. 4 provides a depiction of an exemplary process by which polymer particles formed by the disclosed technology are fixed in position by glass beads and then contacted with a flow (upwards arrow) of gas, e.g., nitrogen gas.

FIG. 5 provides a schematic representation of the solid-state polycondensation reaction set-up.

FIG. 6 provides A) DMA curves of polyamide samples at 10 mol % (solid line) and 20 mole% (dashed line) cross-linker; and B) stress relaxation curves of polyamide samples at 10 mol % (solid line), 20 mol % (dashed line) cross-linker, and conventional polyamide-6 (gray solid line).

FIG. 7 provides A) DMA curves of polyamide samples with $CeO_2$ catalyst (solid line), $MnO_2$ catalyst (dashed line), pre-cured $AlCl_3$ catalyst (open gray line), and post-cured $AlCl_3$ (dashed-dotted line); and B) stress relaxation curves of polyamide samples with $CeO_2$ catalyst (solid line), $MnO_2$ catalyst (dashed line), $AlCl_3$ catalyst (dash-dotted line).

DETAILED DESCRIPTION OF ILLUSTRATIVE ASPECTS

The present disclosure may be understood more readily by reference to the following detailed description of desired aspects and the examples included herein. In the following specification and the claims that follow, reference will be made to a number of terms.

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of the present disclosure. All publications, patent applications, patents and other references mentioned herein are incorporated by reference in their entirety. The materials, methods, and examples disclosed herein are illustrative only and not intended to be limiting.

The singular forms "a," "an," and "the" include plural referents unless the context clearly dictates otherwise.

As used in the specification and in the claims, the term "comprising" may include the aspects "consisting of' and "consisting essentially of." The terms "comprise(s)," "include(s)," "having," "has," "can," "contain(s)," and variants thereof, as used herein, are intended to be open-ended transitional phrases, terms, or words that require the presence of the named ingredients/steps and permit the presence of other ingredients/steps. However, such description should be construed as also describing compositions or processes as "consisting of' and "consisting essentially of' the enumerated ingredients/steps, which allows the presence of only the named ingredients/steps, along with any impurities that might result therefrom, and excludes other ingredients/steps.

Numerical values in the specification and claims of this application, particularly as they relate to polymers or polymer compositions, reflect average values for a composition that may contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values). The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4.

Described herein are processes for preparing polymer compositions. These processes comprise combining a polyamine/ammonium salt component, a polyamide component, and a polyacid or polycarbonate salt. Optionally, a transamidation catalyst may be incorporated to the combination at a temperature of from about 120 °C to about 220 °C in the absence of solvent. Polymer compositions prepared according to these methods are also described. The disclosure

is also directed to molded articles prepared from the polymer compositions of the disclosure.

The polymer compositions prepared according to the described methods can be "dynamic cross-linked polymer compositions." "Dynamic cross-linked polymer compositions" have dynamically, covalently cross-linked polymer networks. At low temperatures, dynamic cross-linked polymer compositions behave like classic thermosets, but at elevated temperatures, it is believed that the cross-links undergo rearrangement(here, for example, transamidation) reactions. At those elevated temperatures, the rearrangement happens at such a rate that flow-like behavior is observed and the material can be processed. Hence, the polymer can be processed much like a viscoelastic thermoplastic. At lower temperatures, these dynamic cross-linked polymer compositions behave more like classical thermosets. As the rate of inter-chain rearrangement slows down, the network becomes more rigid. The dynamic nature of their cross-links allows these polymers to be heated, reheated, and reformed, as the polymers maintain structural integrity under demanding conditions.

A pre-dynamic cross-linked polymer composition may be cured to arrive at the final state of being a dynamic cross-linked polymer composition; and a pre-dynamic cross-linked composition when subjected to a curing process may (a) exhibit a plateau modulus of from about 0.01 MPa to about 1000 MPa when measured by dynamic mechanical analysis at a temperature above a melting temperature of the polyamide of the pre-dynamic cross-linked composition and (b) exhibit a capability of relaxing internal residual stresses at a characteristic timescale of between 0.1 and 100,000 seconds above a glass transition temperature of the polyamide, as measured by stress relaxation rheology measurement.

As used herein, "pre-dynamic cross-linked polymer composition" refers to a mixture comprising all the required elements to form a dynamic cross-linked polymer composition, but which has not been cured sufficiently to establish the requisite level of cross-linking for forming a dynamic cross-linked polymer composition. Upon sufficient curing, for example, a pre-dynamic cross-linked polymer composition may convert to a dynamic cross-linked polymer composition. In some aspects, curing may comprise heating the composition to a temperature above the glass transition temperature of the polyamide component, when applicable. Curing may also be effected, when applicable, at a temperature between the glass transition temperature $T_g$ and melting temperature $T_m$ of the polyamide component.

As an example, sufficient curing may occur, for example, by heating the composition to a temperature between 150 °C and 270 °C to convert the pre-dynamic cross-linked polymer composition to a dynamic cross-linked polymer composition. Pre-dynamic cross-linked polymer compositions may comprise a coupler component and a chain (in some aspects, the chain comprising a polyamide) component. A coupler component may act to cross-link polymer chains, e.g., to cross-link polyamide chains via transamidation.

A pre-dynamic cross-linked composition may in some aspects comprise a polymer component wherein the pre-dynamic polymer composition comprises polyamide component chains linked by a coupler component. The pre-dynamic cross-linked composition may be formed in the presence of a suitable catalyst. The pre-dynamic cross-linked may also comprise optional additives. In a specific example, the pre-dynamic cross-linked polymer compositions described herein may comprise a coupler component and a polyamide component reacted in the presence of one or more catalysts. The pre-dynamic composition may also comprise one or more additional additives, e.g., fillers such as glass fiber (or other fibers) or talc.

As used herein, "dynamic cross-linked polymer composition" refers to a class of polymer systems that include dynamically, covalently cross-linked polymer networks. At low temperatures, dynamic cross-linked polymer compositions behave like classical thermosets, but at higher temperatures, for example, temperatures up to about 320 °C, it is theorized that the cross-links have dynamic mobility, resulting in a flow-like behavior that enables the composition to be processed and re-processed. Dynamic cross-linked polymer compositions incorporate covalently cross-linked networks that are able to change their topology through thermos-activated bond exchange reactions. The network is capable of reorganizing itself without altering the number of cross-links between its chains of chain segments. At high temperatures, dynamic cross-linked polymer compositions achieve rearrangement (transamidation) rates that permit mobility between cross-links, so that the network behaves like a flexible rubber. At low temperatures, exchange reactions are very slow and dynamic cross-linked polymer compositions behave like classical thermosets. Put another way, dynamic cross-linked polymer compositions can be heated to temperatures such that they become liquid without suffering destruction or degradation of their structure.

An article made from a dynamic cross-linked polymer composition can be heated and deformed, and upon returning to the original temperature, maintains the deformed shape. As such, articles in accordance with the present disclosure may comprise a shape generated by applying mechanical forces to a molded piece formed from the dynamic cross-linked polymer composition. This combination of properties permits the manufacture of shapes that are difficult or impossible to obtain by molding or for which making a mold would not be economical. Dynamic cross-linked polymer compositions generally have good mechanical strength at low temperatures, high chemical resistance, and low coefficient of thermal expansion, along with processability at high temperatures. Examples of dynamic cross-linked polymer compositions are described herein, as well as in U.S. Patent Application No. 2011/0319524, WO 2012/152859; WO 2014/086974; D. Montarnal et al., Science 334 (2011) 965-968; and J.P. Brutman et al, ACS Macro Lett. 2014, 3, 607-610. As an example, articles may be formed from the dynamic cross-linked polymer compositions of the present

disclosure and may include composites, a thermoformed material, or a combination thereof.

Examining the nature of a given polymer composition can distinguish whether the composition is cross-linked, reversibly cross-linked, or non-cross-linked, and distinguish whether the composition is conventionally cross-linked or dynamically cross-linked. Dynamically cross-linked networks feature bond exchange reactions proceeding through an associative mechanism, while reversible cross-linked networks feature a dissociative mechanism. That is, the dynamically cross-linked composition remains cross-linked at all times, provided the chemical equilibrium allowing cross-linking is maintained. A reversibly cross-linked network however shows network dissociation upon heating, reversibly transforming to a low-viscous liquid and then reforming the cross-linked network upon cooling. Reversibly cross-linked compositions also tend to dissociate in solvents, particularly polar solvents, while dynamically cross-linked compositions tend to swell in solvents as do conventionally cross-linked compositions.

The cross-linked network apparent in dynamic and other conventionally cross-linked systems may also be identified by rheological testing. An oscillatory time sweep (OTS) measurement at fixed strain and temperature may be used to confirm network formation. Exemplary OTS curves are presented in FIG. 1 for a polymer. A curve may indicate whether or not the polymer has a cross-linked network. Initially, the loss modulus (viscous component, dotted line) has a greater value than the storage modulus (elastic component, solid line) indicating that the material behaves like a viscous liquid. Polymer network formation is evidenced by the intersection of the loss and storage modulus curves. The intersection, referred to as the "gel point," represents when the elastic component predominates the viscous component and the polymer begins to behave like an elastic solid.

In distinguishing between dynamic cross-linking and conventional (or non-reversible) cross-linking, a stress relaxation measurement may also, or alternatively, be performed at constant strain and temperature. After network formation, the polymer may be heated and a certain strain is imposed on the polymer. After removing the strain, the resulting evolution of the elastic modulus as a function of time reveals whether the polymer is dynamically or conventionally cross-linked. Exemplary curves for dynamically and conventionally cross-linked polymer networks are presented in FIG. 2.

Stress relaxation generally follows a multimodal behavior:

$$G/G_0 = \sum_{i=1}^{n} C_i \exp\left(-t/\tau_i\right),$$

where the number (n), relative contribution ($C_i$) and characteristic timescales ($\tau_i$) of the different relaxation modes are governed by bond exchange chemistry, network topology and network density. For a conventional cross-linked networks, relaxation times approach infinity, $\tau \to \infty$, and $G/G_0 = 1$ (horizontal dashed line). Apparent in the curves for the normalized modulus ($G/G_0$) as a function of time, a conventionally cross-linked network does not exhibit any stress relaxation because the permanent character of the cross-links prevents the polymer chain segments from moving with respect to one another. A dynamically cross-linked network, however, features bond exchange reactions allowing for individual movement of polymer chain segments thereby allowing for complete stress relaxation over time.

If the networks are DCNs, they should be able to relax any residual stress that is imposed on the material as a result of network rearrangement at higher temperature. The relaxation of residual stresses with time (t) can be described with single-exponential decay function, having only one characteristic relaxation time $\tau^*$:

$$G(t) = G(0) \times \exp\left(-\frac{t}{\tau^*}\right)$$

A characteristic relaxation time can be defined as the time needed to attain particular G(t)/G(0) at a given temperature. At lower temperature, the stress relaxes slower, while at elevated temperatures network rearrangement becomes more active and hence the stress relaxes faster, proving the dynamic nature of the network. The influence of temperature on the stress relaxation modulus clearly demonstrates the ability of the cross-linked network to relieve stress or flow as a function of temperature. It should be understood, however, that the foregoing is illustrative only, as some DCN systems may be characterized as having relaxation behaviors that differ from the foregoing. As one example, a DCN may be characterized as having two or even more characteristic relaxation times.

As shown in FIG. 2, the starting point for stress relaxation measurements, to may be selected to be 0.1 seconds, because the experimental set-up typically does not allow for reliable measurements at timescales shorter than 0.1 seconds. This may be attributed to inertial effects, "setting" of a sample between rheometer plates. Ideally, the normalized modulus follows a (multi-) exponential decay over time:

$$\text{Normalized modulus} = \Sigma c_i \times \exp(-t/\tau_i^*) \approx \exp(-t/\tau_i^*), \text{ if } \tau_2^*, \tau_3^*, \ldots, \tau_n^* >> \tau_1^*$$

Additionally, the influence of temperature on the stress relaxation rate in correspondence with transamidation rate were investigated by fitting the characteristic relaxation time, $\tau^*$ to an Arrhenius type equation.

$$\ln \tau^* = -E_a/RT + \ln A$$

where $E_a$ is the activation energy for the transamidation reaction.

Generally, a dynamic mechanical analysis (DMA) of storage modulus as a function of temperature may exhibit particular characteristics. A dynamically cross-linked polymer composition may exhibit a plateau modulus of from about 0.01 MPa to about 1000 MPa, at a temperature above the melting temperature (and, depending on the polymer, above the glass transition temperature) of the polymer component (here, a poly(amide-6) PA-6). Nonlimiting FIG. 3 provides a set of exemplary, qualitative curves. Two of the three curves (curves B and C) exhibit a plateau modulus above a certain temperature, thus depicting a dynamically cross-linked network. One of the three curves (curve A), instead of showing a plateau modulus above a certain temperature, exhibits an abrupt decline in modulus at the elevated temperature. Thus, curve A provides a qualitative depiction of a non-dynamically cross-linked polymer composition. It should be understood that exemplary curve A represents a poly(amide-6) PA-6sample; for a highly physically-entangled network, one may observe a plateau that starts to drop at higher temperatures depending on molecular weight and other system characteristics.

The present disclosure is directed to methods of preparing polymer compositions by combining a polyamide component and one or more of a polyamine component, a polyammonium salt component, a polyacid component, or a polycarboxylate salt component, and, optionally, a transamidation catalyst. The polymer compositions prepared according to the described methods can be "dynamic cross-linked polymer compositions." Described herein are methods of preparing dynamic cross-linked polymer compositions by solid-state modification. In one aspect, a method of forming a polymer may comprise forming a solid solution that comprises (a) a polyamide component, and one or more of (b) a polyamine component, (c) a polyammonium salt component, (d) a polyacid, or (d) a polycarbonate salt. The polyamide/ammonium salt component and the polyamide component may be polymerized so as to form polymer chains and to form cross-links among the polymer chains to give rise to a pre-dynamically cross-linked network polymer composition. The composition may have one or both of an amorphous polyamide region and a crystalline polyamide region.

A method of forming a polymer composition by solid-state modification may comprise: forming a solution that comprises: a polyamide component, and one or more of a polyammonium salt component, a polyamine, a polyacid, or a polycarboxylate salt, and optionally a transamidation catalyst. From the solution, a solid may be formed. The solid may comprise an amount of the polyamide in at least partially crystalline particulate form, and one or more of the polyammonium salt component, the polyamine component, the polyacid component, or the polycarboxylate component and the optional transamidation catalyst. The solid may then be heated at a temperature between the Tg and Tm of the at least partially crystalline particulate polyamide so as to form a dynamically cross-linked network polymer composition.

***Polyamide component***

The dynamically cross-linked compositions of the present disclosure may be prepared from a polyamide component. Polyamide resins may be obtained according to well-known processes such as those described in U.S. Patent Nos. 2,071,250; 2,071,251; 2,130,523; 2,130,948; 2,241,322; 2,312,966; and 2,512,606. As an example, polyamides can be prepared by polymerizing a monoamine-monocarboxylic acid or a lactam thereof having at least two carbon atoms between the amino and carboxylic acid groups. Polyamides may also be prepared by polymerizing substantially equimolecular proportions of a carboxylic acid and a diamine containing at least two carbon atoms between the amino groups. In further examples, polyamides can be prepared by polymerizing a monoamine-carboxylic acid or a lactam thereof with substantially equimolecular proportions of a diamine and dicarboxylic acid. Polyamide resins are commercially available from a wide variety of sources.

Polyamides may generally include aliphatic polyamides which feature an aliphatic main chain; high performance polyamides which feature repeating units of the semi-aromatic polyphthalamide molecule; and aramides which feature repeating aromatic units.

Exemplary polyamide resins may include nylon-6 (polyamide 6, PA-6) and nylon-6,6 (polyamide 6,6, PA-6,6) which are available from a variety of commercial sources. Other exemplary polyamides can include nylon-4, nylon-4,6 (PA 46), nylon-12, nylon-6,10, nylon-6,9, nylon-6,12, nylon-9T, copolymer of nylon-6,6 and nylon-6, nylon 610 (PA610), nylon 11 (PA11), nylon 12 (PA 12), nylon 6-3-T (PA 6-3-T), polyarylamid (PA MXD 6), polyphthalamide (PPA) and/or

poly-ether-block amide, and others such as the amorphous nylons, may also be useful. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane. Mixtures of various polyamides, as well as various polyamide copolymers, are also useful. In some examples, the polyamide resin can include a combination of nylon 6 and nylon 6,6 in an amount of from about 20 wt. % to about 90 wt. %.

As noted above, in certain examples the dynamically cross-linked composition may include from about 20 wt. % to about 90 wt. % of the polyamide base resin. In other examples the resin composite includes from about 30 wt. % to about 90 wt. % of the polyamide base resin, or from about 40 wt. % to about 90 wt. % of the polyamide base resin, or from about 50 wt. % to about 90 wt. % of the polyamide base resin, or from about 60 wt. % to about 90 wt. % of the polyamide base resin, or from about 70 wt. % to about 90 wt. % of the polyamide base resin, or even from about 80 wt. % to about 90 wt. % of the polyamide base resin.

As used herein, a "polyamide component" is a polymer that has amide linkages, i.e., polyamide. The polymer can be a polyamide, which contains only amide linkages between monomers. The polymer can also be a copolyamide, which is a copolymer containing amide linkages and potentially other linkages as well. The polymer having amide linkages can be an aliphatic polyamide PA-z, for example, (PA-6; see Structure **I**, with *z* = 6) resin, also known as PA-6 or nylon-6, or (PA-xy; see Structure **II**) resin, also known as poly(amide-6,6) (PA-6,6):

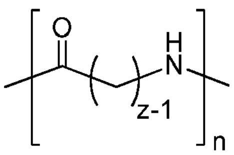

**Structure I**
Aliphatic PA-*z*

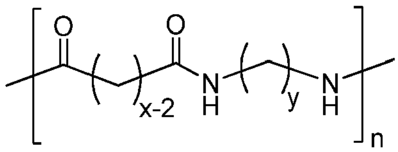

**Structure II**
Aliphatic PA-*xy*

where n is the degree of polymerization, and can be as high as 1,000, and the polymer may have a weight average molecular weight of up to 100,000.

The polymer having amide linkages can be (semi-)aromatic PPA (PA-yT or PA-yl; Structure **III**) and Aramids (Structure **IV**):

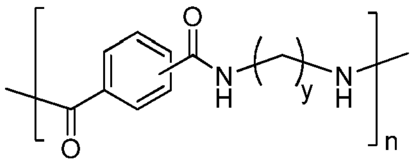

**Structure III**
Semi-aromatic PA-*y*T or PA-*y*I

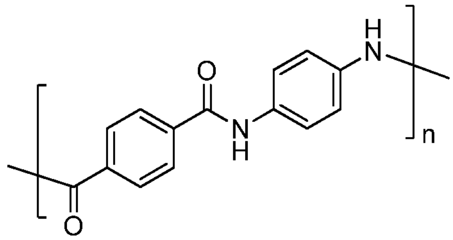

**Structure IV**
Aromatic polyamide (Aramid)

where n is the degree of polymerization, and can be as high as 1,000, and the polymer may have a weight average molecular weight of up to 100,000.

In certain examples, the polyamides described herein may further include oligomers. In yet further examples, the polyamides described herein may further include oligomers where the value of n can be up to about 10.

The polyamide component may comprise a plurality of crystalline regions bound to amorphous regions. As used herein, a crystalline region may refer to a structure in which the polymer chain segments are arranged in a crystalline arrangement. Crystalline arrangements describe structures of ions, molecules, or atoms that are held together in an ordered, typically three-dimensional arrangement. The arrangement may be periodically repeating. An amorphous region may refer to a structure in which polymer chain portions or segments have a non-orderly arrangement. Methods of the present disclosure may further comprise applying an inert gas to the polyamide in at least partially crystalline form, to the dynamically cross-linked network polymer composition, or to both. The inert gas may be used to remove any condensate that has formed, depending upon the type of polyamide used. At least a portion of the polyamide may be in at least a partially crystalline form. To achieve a partially crystalline form, at least a portion of the polyamide may be ground using any appropriate means known in the art.

Exemplary polymer compositions prepared according to the described methods can include about 45 mol %

to about 80 mol %, or from about 45 mol% to about 95 mol% of the polyamide component. For example, the polymer composition may comprise example about 45, 50, 55, 60, 65, 70, 75, or about 80 mol%, and any value there between, of the polyamide component.

***Coupler component***

The compositions of the present disclosure suitably include a coupler component which may function as chain extender or a cross-linking agent. The coupler component may comprise multifunctional moieties. In various aspects, a dynamically cross-linked polymer composition may be prepared from a solid solution comprising a multifunctional amine, such as a polyamine component or polyammonium salt, as a coupler component. As used herein a polyamine/ammonium salt may refer to a polyamine component further comprising an amount of one or more polyamines having a multifunctional ammonium salt. A polyamine may comprise two or more $-NH_2$ groups. Suitable polyamines include, but are not limited to, tetra amino benzene and tris(2-aminoethyl)amine , or any combination thereof.

In addition to a polyamine, an ammonium salt (also termed a polyammonium salt and also termed a polyamine/ammonium salt, in some cases) may be used. In certain examples, the polyammonium salt as a coupler component of the present disclosure may comprise at least three amine groups.

A polyammonium salt may have a general structure V:

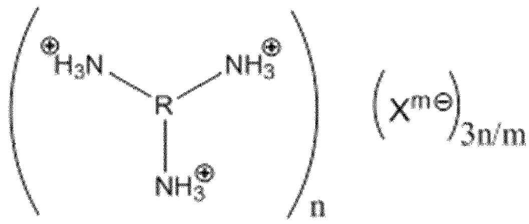

**Structure V**

where R is any chemical group, X is any counter ion with valency m.

As one particular example, suitable polyammonium salts include structure VI, a triammoniumethyl)amine sebacate:

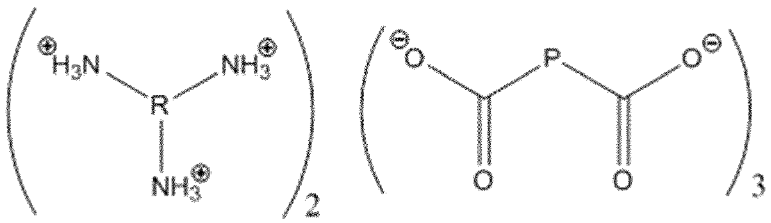

**Structure VI**

where R is any chemical group.

Polyamines may also be useful in the present disclosure as coupler components. A general polyamine formula is provided below as structure VII:

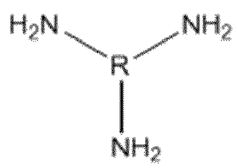

**Structure VII**

where R is any chemical group.

In yet further aspects, the coupler component may comprise a polyacid component or its equivalent polycarboxylate salt in structure. Polyacids refer to compound having two or more acid groups. Polyacids may also include esters and anhydrides of the acid. Exemplary polyacid and polyacid salt are shown as structures VII and IX as well as Structure X described elsewhere herein:

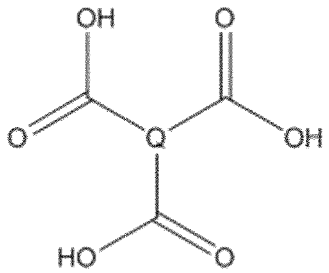

**Structure VIII**

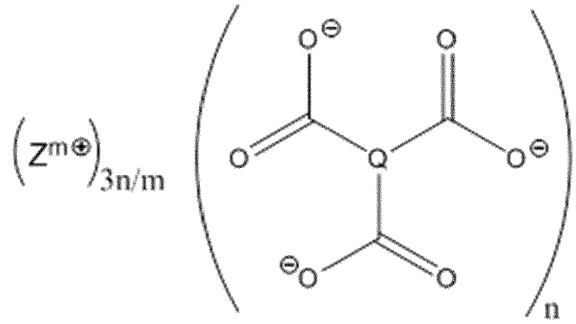

**Structure IX**

where Q is any chemical group, Z is any counter ion, metal or organic moiety with valency m.

Exemplary polymer compositions prepared according to the described methods can include about 0.5 mol% to about 45 mol% of the polyamine/ammonium salt component. For example, the polymer composition may comprise about 0.5, 1, 5, 10, 15, 20, 25, 30, 35, 40, or about 45 mol%, any value there between, and any range of values there between of the polyammonium salt component.

Polycarboxylate salts represent another group of compounds available as the coupler component in the present disclosure. These compounds include salts or esters of polycarboxylic acid. Polycarboxylic acids are compounds having two or more carboxylic acid (COOH) groups. Exemplary polycarboxylate salts may include, but are not limited to, fatty acid based derivatives, benzene tricarboxylate salts, salts of tartaric acid, among others.

The coupler component as described herein may be present in an amount from about 1 % to about 20% based on the total weight of the composition, including exemplary values of about 2 %, 3 %, 4 %, 5 %, 6 %, 7 %, 8 %, 9 %, 10 %, 11 %, 12 %, 13 %, 14 %, 15 %, 16 %, 17 %, 18 %, or about 19 %. In further examples, the coupler component may be present in a range derived from any two of the above listed exemplary values.

***Catalysts***

As provided herein, the pre-dynamic cross-linked polymer composition may, in some aspects, comprise one or more catalysts, though this is not a requirement. The polyamide component may be reacted in the presence of one or more suitable catalysts. Certain catalysts may be used to catalyze the reactions described herein. One or more transamidation catalysts may be used herein to facilitate the formation of a network throughout the compositions disclosed. Transamidation catalysts are known in the art and may include metal complexes (including Lewis acidic metal complexes), nucleophilic alkali-metal amidos (compound having - $NH_2$ moiety), transition metal and main group amidos. Typically, transamidation catalysts may be chosen from metal salts or phosphates such as calcium-bis((3,5-bis (1,1-dimethylethyl)-4-hydroxyphenyl)methyl)ethylphosphonate, Ciba Irgamod 195. Suitable transamidation catalysts are also described in Papaspyridis, et. al., Solid State Polymerization (1st ed. 2009). Transamidation catalysts may include inorganic catalysts, particularly those selected from the group comprising lithium, sodium, potassium, calcium, beryllium, magnesium, zinc, cadmium, strontium, aluminum, lead, chromium, molybdenum, titanium, manganese, iron, cobalt, germanium, nickel, copper, silver, mercury, tin, platinum, boron, antimony, bismuth, palladium and cerium as the metal or in oxidic form. A specific transamidation catalyst is $Sb_2O_3$. Exemplary transamidation catalysts may include the oxides or chlorides of any of the forgoing metals and transition metals described herein. For example, the transamidation catalyst may comprise cerium(IV) oxide ($CeO_2$), manganese(IV) oxide ($MnO_2$), aluminum(III) chloride ($AlCl_3$). Other transamidation catalysts may include boric acid, l-proline, Chitosan, sulfated tungstate, hydroxylamine hydrochloride (C. Liana Allen, Ang. Chem. Int. Ed 51(6), 1383-1386), sulphuric acid immobilized on silica (RSC Adv. 2015, 5, 10567-10574).

The transamidation catalyst used in the methods of the disclosure may include one or more catalysts. In some aspects, the transamidation catalyst is cerium (IV)oxide ($CeO_2$). In other aspects, the transamidation catalyst is boric acid or aluminum(III) chloride ($AlCl_3$). In still other aspects, the transamidation catalyst is manganese(IV) oxide ($MnO_2$).

One or more of the catalysts used in the methods of the disclosure may be added as a separate component of the reaction mixture. In other aspects, one or more of the catalysts may be inherently present in the polyamide component as a residual catalyst from the polyamide polymerization process.

As used herein, a "transamidation catalyst" may catalyze the cross-linking reactions of the present disclosure.

The transamidation catalyst is used in an amount up to about 30 mol%, for example, about 0.025 mol% to about 30mol%, of the total molar amount of amide groups in the polyamide component. Alternatively, the catalyst is used in an amount of from 0.1% to 10% by mass relative to the total mass of the reaction mixture, and preferably from 0.5% to 5%. Exemplary polymer compositions prepared according to the described methods can include about 0.025 to about 30 mol% of the optional transamidation catalyst, for example 0.025, 0.05, 0.075, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 6, 7, 8, 9, 10, 11, 12, 13, 14, 15, 16, 17, 18, 19, 20, 21, 22, 23, 24, 25, 26, 27, 28, 29 or about 30 mol% of the optional transamidation catalyst.

In certain aspects, the polyamide component, and one or more of the polyamine/ammonium salt component, polyamine, polyacid, or polycarboxylate salt, and the optional transamidation catalyst are combined in the presence of an amount of solvent so as to facilitate the component combination. Following the combination, some or all of the solvent may be removed, e.g., by increased temperature, reduced pressure, or a combination of both. The reaction mixture may, comprise between 0 and 5 wt% of an organic or polyfluorinated solvent. As a further example, the reaction mixture may comprise about 1, 1.5, 2, 2.5, 3, 3.5, 4, 4.5, or about 5 wt% of an organic or polyfluorinated solvent; perfluorinated solvents are considered especially suitable. In further examples, solvents may include phenolic or fluoric solvents as well as mixtures of formic acid and dichloromethane. In some aspects, the polyamine/ammonium salt component, the polyamide component, and the optional transamidation catalyst are combined free of any solvent.

The polyamide component, and one or more of the polyamine/ammonium salt component, polyamine, polyacid, or polycarboxylate salt, and the optional transamidation catalyst may be combined in an inert atmosphere, i.e., an atmosphere having less than atmospheric levels of oxygen. In some aspects, the inert atmosphere contains less than 5 vol% of oxygen. For example, the polyamine/ammonium salt component, the polyamide component, and the optional transamidation catalyst can be combined in the presence of a nitrogen or argon atmosphere.

The reaction mixture comprising polyamide component, and one or more of the polyamine/ammonium salt component, polyamine, polyacid, or polycarboxylate salt, and the optional transamidation catalyst can be heated to a temperature of, e.g., from about 120 °C to about 220 °C to produce the polymer composition of the disclosure, depending on the polymers involved. For example, the combination of polyamide component, and one or more of the polyamine/ammonium salt component, polyamine, polyacid, or polycarboxylate salt, and the optional transamidation catalyst can be heated to a temperature of about 140, 150, 160, 170, 180, 190, 200, 210 or about 220 °C. In preferred aspects, the combination of the polyamine/ammonium salt component, the polyamide component, and the optional transamidation catalyst is heated to between about 140 °C and about 200 °C. In an aspect, a combination may be subjected to two or more temperatures. As one example, polyamide component, and one or more of the polyamine/ammonium salt component, polyamine, polyacid, or polycarboxylate salt, and the optional transamidation catalyst may be combined at a first temperature, and then subjected to a second (higher) temperature. In further aspects, it is useful to use a temperature that avoids evaporation of volatile species, e.g., a comonomer. The higher temperature may be used to facilitate removal of any volatile species (e.g., water, amines) that may be evolved by the reaction of the polyamine, polyamide, and optional transamidation catalyst.

The mixture comprising a polyamide component, and one or more of the polyammonium salt component, polyamine component, polyacid component, or polycarboxylate salt component, and the optional transamidation catalyst can be heated for a time sufficient to form the polymer composition. For example, the mixture may be heated for between about 15 minutes and about 24 hours. For example, the mixture can be heated for about 15 minutes, 30 minutes, 45 minutes, 60 minutes, 90 minutes, or 120 minutes. In other aspects, the mixture can be heated for about 3, 4, 5, 6, 7, 8, 9, 10, 11, 12, 13, 14, 15, 16, 17, 18, 19, 20, 21, 22, 23, or about 24 hours to produce the polymer compositions of the disclosure.

Exemplary polymer compositions prepared according to the described methods can include about 45 to about 80 or even 99 mol% of the polyamide component, for example about 45, 50, 55, 60, 65, 70, 75, 80, 85, 90 or about 95 mol% of the polyamide component. Exemplary polymer compositions prepared according to the described methods can include about 10 to about 45 mol% of the polyamine/ammonium salt component, for example, about 10, 15, 20, 25, 30, 35, 40, or about 45 mol% of the polyamine/ammonium salt component. Exemplary polymer compositions prepared according to the described methods can include about 0.025 to about 30 mol% of the optional transamidation catalyst, for example 0.025, 0.05, 0.075, 0.1, 0.2, 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 6, 7, 8, 9, 10, 11, 12, 13, 14, 15, 16, 17, 18, 19, 20, 21, 22, 23, 24, 25, 26, 27, 28, 29 or about 30 mol% of the optional transamidation catalyst. The combined mole percentage values of all the components used in the methods of the disclosure does not exceed about 100 mol%.

The polymer compositions produced according to the described methods can be isolated and/or purified using conventional techniques. For example, after the polymer composition is formed, it can be cooled to ambient temperature and discharged from the reaction vessel. It can also be dried, preferably under reduced pressure. The polymer compositions produced according to the described methods can be formed into any form suitable for use in the art.

The methods may further comprise curing the dynamically cross-linked network polymer composition at a temperature from about the $T_g$ to about the $T_m$ of the composition. The methods may also include removing one or more volatile components evolved during the curing. This may be accomplished by venting the system to the exterior environment, by purging or flushing a reaction vessel, or any combination thereof.

The present disclosure also provides methods of forming a polymer composition by solid-state modification, comprising: forming a solution that comprises: a polyamide component, one or more of a polyammonium component, a polyamine, a polyacid, or a polycarboxylate salt and an optional transamidation catalyst, forming, from the solution, a solid that comprises an amount of the polyamide in at least partially crystalline particulate form, the polyol component, and the optional transamidation catalyst, heating the solid at a temperature between the $T_g$ and $T_m$ of the at least partially crystalline particulate polyamide so as to form a dynamically cross-linked network polymer composition.

The methods may comprise application of an inert gas to the polyamide in at least partially crystalline form, to the dynamically cross-linked network polymer composition, or to both. One may remove one or more volatile components during the methods.

At least a portion of the polyamide may be formed into at least a partially crystalline particulate form. Forming the at least a portion of the polyamide into particulate form may comprise grinding the polyamide. This may be done cryogenically or by other methods known to those of skill in the art. The at least partially crystalline particulate form polyamide may have a D50 volume average particle cross-sectional dimension in the range of from about 5 micrometers to about 150 micrometers. The methods may also include curing the dynamically cross-linked network polymer composition at a temperature from about the Tg to about the Tm of the composition.

Polymer resins in fine powder form may become aggregated because of the attractive Van der Waals forces and/or electrostatic forces. Due to that phenomenon, thermoplastic powders with particle sizes suitable for solid-state modification, typically having an average particle size of less than about 150 micrometers, may be agglomerated. The agglomerated particles may form clumps of powder cakes that exhibit poor powder flow or packing properties to obtain the right packing density to remove the condensation products.

The population of thermoplastic particles may have a D50 volume average particle cross-sectional dimension in the range of from about 5 micrometers to about 150 micrometers, e.g., from about 10 micrometers to about 140 micrometers, or from about 20 micrometers to about 130 micrometers, or from about 30 micrometers to about 120 micrometers, or from about 40 micrometers to about 110 micrometers, or from about 50 micrometers to about 100 micrometers, or from about 60 micrometers to about 90 micrometers, or from about 70 micrometers to about 80 micrometers. A user may perform a sieving step to assist in isolating particles of the desired size, e.g., from about 10 to about 150 micrometers in cross-sectional dimension.

Also, the dynamically cross-linked network polymer compositions described herein may comprise a polyamide that comprises a plurality of crystalline regions bound to amorphous regions. At least a portion of the amorphous regions may be cross-linked by cross-links that comprise a reacted polyammonium salt component, or a polyamine component, or a polyacid component, or a polycarboxylate salt component.

Additionally provided are compositions comprising in solid form, an at least partially crystalline polyamide in particulate form, a polyamine/ammonium salt comprising at least three amine groups, and an optional transamidation catalyst. The at least a portion of polyamide that is at least partially crystalline polyamide in particulate form may have a D50 (or Dv50) volume average particle cross-sectional dimension in the range of from about 5 micrometers to about 150 micrometers. In further examples, the at least a portion of polyamide that is at least partially crystalline polyamide in particulate form may have a D50 (or Dv50) volume average particle cross-sectional dimension in the range of from about 5 micrometers ($\mu$m) to 2 millimeters (mm) or 3 mm. Further background on solid state polymerization as well as exemplary particle sizes are also described by Papaspyridis, et. al., *Solid State Polymerization* (1st ed. 2009). The at least partially crystalline polyamide may have a crystallinity in the range of from about 1 to about 90%, or from about 5 to about 85%, or from about 10 to about 80%, or from about 15 to about 75%, or from about 20 to about 70%, or from about 25 to about 65%, or from about 30 to about 60%, or from about 35 to about 55%, or from about 40 to about 50%, or about 45%.

The dynamically cross-linked network polymer composition may be made according to the disclosed methods. The polyamide of the composition may comprise a PA-6 resin, a PA-9 resin, a PA-11 resin, or any combination thereof. The composition may define a molded article; the molding may be injection molding or other molding techniques.

Other disclosed compositions may comprise a dynamically cross-linked copolymer that comprises repeat units of (a) a polyamide and (b1) the product of a polyammonium salt with the polyamide or (b2) the product of a polyamine with the polyamide or (b3) the product of a polyacid with the polyamide or (b4) the product of a polycarboxylate salt with the polyamide. For example, the polyamide comprises a PA-6, PA-9, or PA-11 resin, or any combination thereof.

As used herein, a "polyamine component" is an organic compound having at least two $-NH_2$ residues, preferably, three or four $-NH_2$ residues. Exemplary polyamine components include tetramino benzene and tris(2-aminoethyl)amine.

As used herein, a "polyacid component" is an organic compound having at least two -COOH residues, preferably, three or four -COOH residues. Exemplary polyacid components include polyacrylic acid, benzene tricarboxylic acid,

citric acid, and fatty acid based derivatives.

As used herein, an "ammonium salt component" is a derivative of the polyamine organic compound described earlier with the ammonium salt having at least two - $NH_3^+$ residues, preferably, three or four -$NH_3^+$ residues. Exemplary ammonium salt components include, but are not limited to, salts of tetra amino benzene and tris(2-aminoethyl)

As used herein, an "polycarboxylate salt" is a derivative of the polyacid organic compound described earlier having at least two -COO- residues, preferably, three or four - COO- residues. Polycarboxylate salts often include alkali metal salts of polycarboxylic acids. Exemplary polycarboxylate salt components include, but are not limited to, polycarboxylate salts of polyacrylic acid, benzene tricarboxylic acid, citric acid, and fatty acid based derivatives.

As used herein, a "polyamide component" is a polymer that has amide linkages, i.e., polyamide. The polymer can be a polyamide, which contains only amide linkages between monomers. The polymer can also be a copolyamide, which is a copolymer containing amide linkages and potentially other linkages as well.

The polymer compositions of the disclosure may also further comprise additives, as desired. Exemplary additives include: one or more polymers, ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof. The composition can include various additives ordinarily incorporated into polymer compositions of this type, with the proviso that the additive(s) are selected so as to not significantly adversely affect the desired properties of the thermoplastic composition (good compatibility for example). Such additives can be incorporated at a suitable time during the mixing of the components for forming the composition. As an example, the additives may be introduced before the solid-state polycondensation reaction begins.

Exemplary polymers that can be mixed with the compositions of the disclosure include elastomers, thermoplastics, thermoplastic elastomers, and impact additives. The compositions of the disclosure may be mixed with other polymers such as a polyester, a polyestercarbonate, a bisphenol-A homopolycarbonate, a polycarbonate copolymer, a tetrabromo-bisphenol A polycarbonate copolymer, a polysiloxane-co-bisphenol-A polycarbonate, a polyesteramide, a polyimide, a polyetherimide, a polyamideimide, a polyether, a polyethersulfone, a polyepoxide, a polylactide, a polylactic acid (PLA), an acrylic polymer, polyacrylonitrile, a polystyrene, a polyolefin, a polysiloxane, a polyurethane, a polyamideimide, a polysulfone, a polyphenylene ether, a polyphenylene sulfide, a polyether ketone, a polyether ether ketone, an acrylonitrile-butadiene-styrene (ABS) resin, an acrylic-styrene-acrylonitrile (ASA) resin, a polyphenylsulfone, a poly(alkenylaromatic) polymer, a polybutadiene, a polyacetal, a polycarbonate, an ethylene-vinyl acetate copolymer, a polyvinyl acetate, a liquid crystal polymer, an ethylene-tetrafluoroethylene copolymer, an aromatic polyester, a polyvinyl fluoride, a polyvinylidene fluoride, a polyvinylidene chloride, tetrafluoroethylene, or any combination thereof.

The additional polymer can be an impact modifier, if desired. Suitable impact modifiers may be high molecular weight elastomeric materials derived from olefins, monovinyl aromatic monomers, acrylic and methacrylic acids and their ester derivatives, as well as conjugated dienes that are fully or partially hydrogenated. The elastomeric materials can be in the form of homopolymers or copolymers, including random, block, radial block, graft, and core-shell copolymers.

A specific type of impact modifier may be an elastomer-modified graft copolymer comprising (i) an elastomeric (i.e., rubbery) polymer substrate having a $T_g$ less than about 10 °C, less than about 0 °C, less than about -10 °C, or between about -40 °C to -80 °C, and (ii) a rigid polymer grafted to the elastomeric polymer substrate. Materials suitable for use as the elastomeric phase include, for example, conjugated diene rubbers, for example polybutadiene and polyisoprene; copolymers of a conjugated diene with less than about 50 wt% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric $C_1$-$C_8$ alkyl(meth)acrylates; elastomeric copolymers of $C_1$-$C_8$ alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the $C_1$-$C_6$ esters of acrylic acid and methacrylic acid, specifically methyl methacrylate.

Specific impact modifiers include styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). Exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

The compositions of the disclosure may comprise a UV stabilizer for dispersing UV radiation energy. The UV stabilizer does not substantially hinder or prevent cross-linking of the various components of the compositions of the disclosure. UV stabilizers may be hydroxybenzophenones; hydroxyphenyl benzotriazoles; cyanoacrylates; oxanilides; or hydroxyphenyl triazines. Specific UV stabilizers include poly[(6-morphilino-s-triazine-2,4-diyl)[2,2,6,6-tetramethyl-4-piperidyl) imino]-hexamethylene [(2,2,6,6-tetramethyl-4-piperidyl)imino], 2-hydroxy-4-octyloxybenzophenone

(Uvinul®3008); 6-tert-butyl-2-(5-chloro-2H-benzotriazole-2-yl)-4-methylphenyl (Uvinul® 3026); 2,4-di-tert-butyl-6-(5-chloro-2H-benzotriazole-2-yl)-phenol (Uvinul®3027); 2-(2H-benzotriazole-2-yl)-4,6-di-tert-pentylphenol (Uvinul®3028); 2-(2H-benzotriazole-2-yl)-4-(1,1,3,3-tetramethylbutyl)-phenol (Uvinul® 3029); 1,3-bis[(2'-cyano-3',3'-diphenylacryloyl)oxyl-2,2-bis-{[(2'-cyano-3',3'-diphenylacryloyl)oxy]methyl}-propane (Uvinul® 3030); 2-(2H-benzotriazole-2-yl)-4-methylphenol (Uvinul® 3033); 2-(2H-benzotriazole-2-yl)-4,6-bis(1-methyl-1-phenyethyl) phenol (Uvinul® 3034); ethyl-2-cyano-3,3-diphenylacrylate (Uvinul® 3035); (2-ethylhexyl)-2-cyano-3,3-diphenylacrylate (Uvinul® 3039); N,N'-bisformyl-N,N'-bis (2,2,6,6-tetramethyl-4-piperidinyl)hexamethylenediamine (Uvinul® 4050H); bis-(2,2,6,6-tetramethyl-4-pipieridyl)-sebacate (Uvinul® 4077H); bis-(1,2,2,6,6-pentamethyl-4-piperdiyl)-sebacate + methyl-(1,2,2,6,6-pentamethyl-4-piperidyl)-sebacate (Uvinul® 4092H); or combinations thereof. Other UV stabilizers include Cyasorb 5411, Cyasorb UV-3638, Uvinul 3030, and/or Tinuvin 234.

The compositions of the disclosure may comprise heat stabilizers. Exemplary heat stabilizer additives include, for example, organophosphites such as triphenyl phosphite, tris-(2,6-dimethylphenyl)phosphite, tris-(mixed mono-and di-nonylphenyl)phosphite or the like; phosphonates such as dimethylbenzene phosphonate or the like; phosphates such as trimethyl phosphate, or the like; or combinations thereof.

The compositions of the disclosure may comprise an antistatic agent. Examples of monomeric antistatic agents may include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents may include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example PELESTAT® 6321 (Sanyo) or PEBAX® MH1657 (Atofina), IRGASTAT® P18 and P22 (Ciba-Geigy). Other polymeric materials may be used as antistatic agents are inherently conducting polymers such as polyaniline (commercially available as PANIPOL®EB from Panipol), polypyrrole and polythiophene (commercially available from Bayer), which retain some of their intrinsic conductivity after melt processing at elevated temperatures. Carbon fibers, carbon nanofibers, carbon nanotubes, carbon black, or a combination comprising at least one of the foregoing may be included to render the compositions of the disclosure electrostatically dissipative.

The compositions of the disclosure may comprise anti-drip agents. The anti-drip agent may be a fibril forming or non-fibril forming fluoropolymer such as polytetrafluoroethylene (PTFE). The anti-drip agent can be encapsulated by a rigid copolymer as described above, for example styrene-acrylonitrile copolymer (SAN). PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. An exemplary TSAN can comprise 50 wt % PTFE and 50 wt % SAN, based on the total weight of the encapsulated fluoropolymer. The SAN can comprise, for example, 75 wt% styrene and 25 wt% acrylonitrile based on the total weight of the copolymer. Alternatively, the fluoropolymer can be pre-blended in some manner with a second polymer, such as for, example, an aromatic polycarbonate or SAN to form an agglomerated material for use as an anti-drip agent. Either method can be used to produce an encapsulated fluoropolymer.

The compositions of the disclosure may comprise a radiation stabilizer, such as a gamma-radiation stabilizer. Exemplary gamma-radiation stabilizers include alkylene polyols such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; cycloalkylene polyols such as 1,2-cyclopentanediol, 1,2-cyclohexanediol, and the like; branched alkylenepolyols such as 2,3-dimethyl-2,3-butanediol (pinacol), and the like, as well as alkoxy-substituted cyclic or acyclic alkanes. Unsaturated alkenols are also useful, examples of which include 4-methyl-4-penten-2-ol, 3-methyl-pentene-3-ol, 2-methyl-4-penten-2-ol, 2,4-dimethyl-4-penten-2-ol, and 9 to decen-1-ol, as well as tertiary alcohols that have at least one hydroxy substituted tertiary carbon, for example 2-methyl-2,4-pentanediol (hexylene glycol), 2-phenyl-2-butanol, 3-hydroxy-3-methyl-2-butanone, 2-phenyl-2-butanol, and the like, and cyclic tertiary alcohols such as 1-hydroxy-1-methyl-cyclohexane. Certain hydroxymethyl aromatic compounds that have hydroxy substitution on a saturated carbon attached to an unsaturated carbon in an aromatic ring can also be used. The hydroxy-substituted saturated carbon can be a methylol group ($-CH_2OH$) or it can be a member of a more complex hydrocarbon group such as - $CR^{24}HOH$ or $-CR^{24}{}_2OH$ wherein $R^{24}$ is a complex or a simple hydrocarbon. Specific hydroxy methyl aromatic compounds include benzhydrol, 1,3-benzenedimethanol, benzyl alcohol, 4-benzyloxy benzyl alcohol and benzyl alcohol. 2-Methyl-2,4-pentanediol, polyethylene glycol, and polypropylene glycol are often used for gamma-radiation stabilization.

The term "pigments" means colored particles that are insoluble in the resulting compositions of the disclosure. Exemplary pigments include titanium oxide, carbon black, carbon nanotubes, metal particles, silica, metal oxides, metal

sulfides or any other mineral pigment; phthalocyanines, anthraquinones, quinacridones, dioxazines, azo pigments or any other organic pigment, natural pigments (madder, indigo, crimson, cochineal, etc.) and mixtures of pigments. The pigments may represent from 0.05% to 15% by weight relative to the weight of the overall composition.

The term "dye" refers to molecules that are soluble in the compositions of the disclosure and that have the capacity of absorbing part of the visible radiation.

Exemplary fibers include glass fibers, carbon fibers, polyester fibers, polyamide fibers, aramid fibers, cellulose and nanocellulose fibers or plant fibers (linseed, hemp, sisal, bamboo, etc.) may also be envisaged.

Pigments, dyes or fibers capable of absorbing radiation may be used to ensure the heating of an article based on the compositions of the disclosure when heated using a radiation source such as a laser, or by the Joule effect, by induction or by microwaves. Such heating may allow the use of a process for manufacturing, transforming or recycling an article made of the compositions of the disclosure.

Suitable fillers for the compositions of the disclosure include: silica, clays, calcium carbonate, carbon black, kaolin, and whiskers. Other possible fillers include, for example, silicates and silica powders such as aluminum silicate, synthetic calcium silicate, zirconium silicate, fused silica, crystalline silica graphite, natural silica sand, or the like; boron powders such as boron-nitride powder, boron-silicate powders, or the like; oxides such as $TiO_2$, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix, or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Plasticizers, lubricants, and mold release agents can be included. Mold release agent (MRA) will allow the material to be removed quickly and effectively. Mold releases can reduce cycle times, defects, and browning of finished product. There is considerable overlap among these types of materials, which may include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate, stearyl stearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like.

Various types of flame retardants can be utilized as additives. Suitable flame retardants include, but are not limited to, halogenated flame retardants, like tetrabromo bisphenol A oligomers such as BC58 and BC52, brominated polystyrene or poly(dibromo-styrene), brominated epoxies, decabromodiphenyleneoxide, pentabrombenzyl acrylate monomer, pentabromobenzyl acrylate polymer, ethylene-bis(tetrabromophthalimide, bis(pentabromobenzyl)ethane, metal hydroxides like $Mg(OH)_2$ and $Al(OH)_3$, melamine cyanurate, phosphor based flame retardant systems like red phosphorus, melamine polyphosphate, phosphate esters, metal phosphinates, ammonium polyphosphates, expandable graphites, sodium or potassium perfluorobutane sulfate, sodium or potassium perfluorooctane sulfate, sodium or potassium diphenylsulfone sulfonate and sodium- or potassium-2,4,6-trichlorobenzoate and N-(p-tolylsulfonyl)-p-toluenesulfimide potassium salt, N-(N'-benzylaminocarbonyl) sulfanylimide potassium salt, or a combination containing at least one of the foregoing. Flame retardants are generally used in amounts of about 1.0 wt. % to about 40 wt. % of the resin composite, but could be used in other amounts.

Exemplary antioxidant additives include organophosphites such as tris(nonyl phenyl)phosphite, tris(2,4-di-t-butylphenyl)phosphite ("IRGAFOS 168" or "1-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric

or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants.

The polymer compositions produced according to the disclosure can be dynamic cross-linked polymer compositions and can be used in any application which would benefit from the use of a dynamic cross-linked polymer composition. Articles, for example, molded, formed, shaped, or extruded articles, can be prepared using the polymer compositions produced according to the described methods. The term "article" refers to the compositions of the disclosure being formed into a particular shape. *See, e.g.,* U.S. Provisional Application Nos. 62/026,458; 62/026,465; 62/138,465; 62/138,807; and 62/026,454, the entireties of which are incorporated by reference herein.

In one aspect, the present disclosure provides methods of forming a polymer composition by solid-state modification, comprising: with a solid solution that comprises (a) polyamide component and one or more of (b) a polyamine, (c) a polyammonium salt, (d) a polyacid, or (e) a polycarboxylate salt and (f) an optional transamidation catalyst; polymerizing the polyamine or polyammonium salt or polyacid or polycarboxylate salt component and the polyamide component so as to form polymer chains and to form cross-links among the polymer chains so as to give rise to a dynamically cross-linked network polymer composition that comprises amorphous and crystalline polyester regions.

The methods may further include forming the solid solution by at least one of (a) contacting the polyamide and the polyamine, or polyammonium salt, or polyacid, or polycarboxylate sat component in the presence of a solvent, removing at least a portion of the solvent, and effecting crystallization of at least a portion of the polyamide component and (b) effecting melt-phase mixing and cooling of the polyamine/ammonium salt, and polyamide components and the optional transamidation catalyst. Without being bound to any particular theory, the cooling may result in crystallization of at least some of the polyamide.

## Aspects of the Disclosure

In various aspects, the present disclosure pertains to and includes at least the following aspects.

Aspect 1: A method of forming a polymer composition by solid-state modification, comprising, consisting of, or consisting essentially of:

forming a solid solution that comprises a polyamide component and one or more of (a) a polyammonium salt, (b) a polyamine, (c) a polyacid, or (d) a polycarboxylate salt;
reacting the polyamide component and the one or more of (a) a polyammonium salt, (b) a polyamine, (c) a polyacid, or (d) a polycarboxylate salt, so as to form polyamide polymer chains and to form cross-links among the polyamide polymer chains so as to give rise to a pre-dynamically cross-linked network polymer composition having at least one amorphous polyamide region and at least one crystalline polyamide region.

Aspect 2: The method of Aspect 1, wherein the polymerizing reacting is performed in the presence of a transamidation catalyst.
Aspect 3: The method of Aspect 1, further comprising forming the solid solution by at least one of (1) contacting the polyamide component and the one or more of (a) a polyammonium salt, (b) a polyamine, (c) a polyacid, or (d) a polycarboxylate salt in the presence of a solvent, removing at least a portion of the solvent, and effecting crystallization of at least a portion of the polyamide component or (2) effecting melt-phase mixing and cooling of the polyamide component and the one or more of (a) a polyammonium salt, (b) a polyamine, (c) a polyacid, or (d) a polycarboxylate salt.
Aspect 4: The method of any of Aspects 1-3, further comprising including in the pre-dynamically cross-linked network polymer composition at least one of a dye, a filler, a plasticizer, a fiber, a flame retardant, an antioxidant, a lubricant, wood, glass, metal, an ultraviolet agent, an anti-static agent, an anti-microbial agent, or any combination thereof.
Aspect 5: The method of any of Aspects 1-4, further comprising curing the pre-dynamically cross-linked network polymer composition at a temperature from about the $T_g$ to about the $T_m$ of the composition.
Aspect 6: The method of any of Aspects 1-5, further comprising removing one or more volatile components evolved during the polymerization.
Aspect 7: A method of forming a polymer composition by solid-state modification, comprising, consisting of, or consisting essentially of:

from a solution that comprises:

a polyamide component and one or more of (a) a polyammonium salt, (b) a polyamine, (c) a polyacid, or (d) a polycarboxylate salt, and optionally a transamidation catalyst,

forming, from the solution, a solid that comprises an amount of the polyamide in at least partially crystalline particulate form, the (a) a polyammonium salt, (b) a polyamine, (c) a polyacid, or (d) a polycarboxylate salt and the optional transamidation catalyst;
heating the solid at a temperature between the $T_g$ and $T_m$ of the at least partially crystalline particulate polyamide so as to form a dynamically cross-linked network polymer composition or a pre-dynamically cross-linked network polymer composition.

Aspect 8: The method of Aspect 7, further comprising application of an inert gas to the solution, to the solid, or to both.
Aspect 9: The method of any of Aspects 7-8, further comprising removing one or more volatile components.
Aspect 10: The method of any of Aspects 7-9, further comprising grinding at least part of the solid so as to place that solid into particulate form.
Aspect 11: The method of any of Aspects 7-10, further comprising curing the pre-dynamically cross--linked network polymer composition at a temperature from about the $T_g$ to about the $T_m$ of the composition.
Aspect 12: A dynamically cross-linked network polymer composition, comprising, consisting of, or consisting essentially of:

a polyamide that comprises a plurality of crystalline regions bound to amorphous regions,
at least some of the amorphous regions being cross-linked by cross-links that comprise a reacted (a) a polyammonium salt, (b) a polyamine, (c) a polyacid, or (d) a polycarboxylate salt component.

Aspect 13: The dynamically cross-linked network polymer composition of Aspect 12, wherein the composition is made according to any of Aspects 1-11.
Aspect 14: The dynamically crosslinked network polymer composition of any of Aspects 12-13, wherein the polyamide comprises polyamide-6 (polyamide 6), and polyamide-6,6 (polyamide 6,6), polyamide-4, polyamide-4,6 (polyamide 46), polyamide-12, polyamide-6,9, polyamide-6,12, polyamide-9T, copolymer of polyamide-6,6 and polyamide-6, polyamide-6,10 (polyamide 6,10), polyamide 11 (polyamide 11), polyamide 12 (polyamide 12), polyamide 6-3-T (polyamide 6-3-T), polyarylamid (polyamide MXD 6), polyphthalamide (PPA), poly-ether-block amide, or any combination thereof.
Aspect 15: The dynamically cross-linked network polymer composition of any of Aspects 12-14, wherein the composition defines a molded article.
Aspect 16: A composition, comprising, consisting of, or consisting essentially of: in solid form, an at least partially crystalline polyamide in particulate form, (1) one or more of (a) a polyammonium salt comprising at least three amine groups, (b) a polyamine, (c) a polyacid, and (d) a polycarboxylic acid salt, and (2) optionally, a transamidation catalyst.
Aspect 17: The composition of Aspect 16, wherein the at least partially crystalline polyamide in particulate form has a Dv50 in the range of from about 5 micrometers to about 150 micrometers.
Aspect 18: A composition, comprising, consisting of, or consisting essentially of: a dynamically cross-linked copolymer that comprises repeat units of a polyamide, the repeat units being crosslinked by the reaction product of (a) a polyammonium salt, (b) a polyamine, (c) a polyacid, or (d) a polycarboxylate salt with the polyamide.
Aspect 19: The composition of Aspect 18, wherein the polyamide comprises polyamide-6 (polyamide 6), and polyamide-6,6 (polyamide 6,6), polyamide-4, polyamide-4,6 (polyamide 46), polyamide-12, polyamide-6,10, polyamide-6,9, polyamide-6,12, polyamide-9T, copolymer of polyamide-6,6 and polyamide-6, polyamide -6,10 (polyamide 6,10), polyamide 11 (polyamide 11), polyamide 12 (polyamide 12), polyamide 6-3-T (polyamide 6-3-T), polyarylamid (PA MXD 6), polyphthalamide (PPA), poly-ether-block amide, or any combination thereof.
Aspect 20: The composition of any of Aspects 18-19, wherein the polyammonium salt comprises at least three amine groups.

The following examples are provided to illustrate the compositions, processes, and properties of the present disclosure. The examples are merely illustrative and are not intended to limit the disclosure to the materials, conditions, or process parameters set forth therein.

## EXAMPLES

### *Example 1 - Preparation of the ammonium salt cross-linker*

A mass of 20.2 grams of sebacic acid (0.10 mol; CAS: 111-20-6; obtained from Acros Organics, Belgium) was

placed in a round-bottom flask and dissolved in 200 milliliters (mL) of ethanol (CAS: 64-17-5). The solution was heated in an oil bath to 55 °C to complete dissolution and when completely dissolved, 150 mL of the sebacic acid solution was taken (corresponding to 15.2 grams, 0.075 mol) and 7.31 grams of tris(2-aminoethyl)amine (0.050 mol, 0.67 equiv.; CAS: 4097-89-6; from Sigma-Aldrich, the Netherlands) were added. The flask was swirled and a white precipitate formed. The precipitate was filtered using a Büchner funnel and dried in air to afford the tris(2-ammoniumethyl)amine sebacate salt cross-linker (henceforth abbreviated as TAEA-SA, see Structure X). Yield: 22.30 gram (quantitative); $^1H$ NMR/$^{13}C$ NMR: not obtained, product is insoluble in common solvents for NMR analysis.

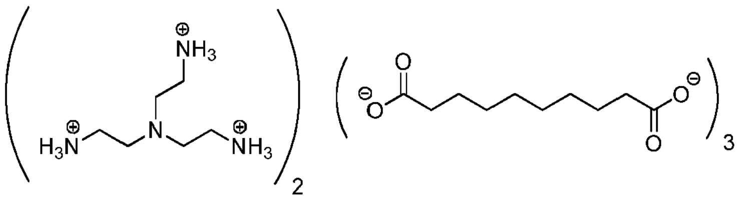

**Structure X**

TAEA-SA salt cross-linker

***Example 2 - Preparation of the reaction mixture for solid-state post-condensation (SSP)***

Amine-enriched polyamide-6 (abbr.: PA-6; CAS: 25038-54-4; TECHNYL ASN 27/32-35 LC NATUREL, from Rhodia Opérations, France), TAEA-SA cross-linker and, optionally, the catalyst were dissolved in HFIP (1,1,1,3,3,3-hexafluoro-*iso*-propanol; CAS: 920-66-1; Acros Organics, Belgium) at a total solids concentration of ca. 0.25 grams per milliliter g/mL. If necessary, the mixture was heated to 40 °C to facilitate dissolution of the starting materials. After complete dissolution, the mixture was transferred to a rotary film evaporator and the HFIP solvent was evaporated at 60 °C *in vacuo.* Subsequently, the solid residue was cut into small pieces, cooled with liquid nitrogen and milled using a laboratory mill to give a fine powder. This powder was dried overnight at 40 °C *in vacuo* prior to starting the SSP process.

***Example 3 - General procedure for solid-state post-condensation (SSP)***

A glass SSP reactor (inner diameter = 24 mm) was used which had a sintered glass bottom and heat exchange coil (i.d. = 0.5 mm) that surrounds the reactor. Nitrogen gas was purged through the heat exchange coil and reactor to fluidize and heat the SSP reaction mixture. The entire set-up was placed in a temperature-controlled oil bath. The SSP set-up is schematically shown in Figure 5.

For a typical SSP experiment, 5-10 g of the powdered SSP mixture was loaded into the SSP reactor and the powder was fixed by the addition of glass beads on top, then purged with nitrogen for 15-30 min. After purging, the reactor was placed in the oil bath that was preheated to 200 °C. The SSP reaction was allowed to take place for a period of 24 h, while periodically samples were taken from the SSP reaction mixture for analysis. After 24 h, the remaining reaction mixture was cooled down and discharged from the SSP reactor for further analysis.

***Example 4 [competitive] - SSP of PA-6***

An SSP reaction mixture consisting of only PA-6 resin was prepared similar to. the method disclosed in Example 2. After drying, this powder was loaded into a glass SSP reaction vessel and the mixture was subjected to the general conditions for SSP as described in Example 3. Samples were periodically taken and analyzed with GPC to check the evolution of molecular weight distribution during SSP. A slight increase in number-average molecular weight ($M_n$) and polydispersity index (PDI) were measured during SSP: $M_n$ = 31.9 kilograms per mol (kg/mol), PDI = 1.98 (0 hours); $M_n$ = 34.0 kg/mol, PDI = 2.18 (8 hours); $M_n$ = 36.8 kg/mol, PDI = 2.19 (24 hours).

***Example 5 - Dynamic mechanical analysis (DMA)***

DMA measurements were carried out on a Q800 (TA Instruments). A sample bar with dimensions of 20 mm × 8 mm × 1 mm was tested in tensile mode. The samples were tested in a temperature range from 0-270 °C at a heating rate of 3 °C/min.

*Example 6 - Stress relaxation rheology (SR)*

Stress relaxation measurements were carried out on an Ares G2 rheometer (TA Instruments) using an 8 mm parallel plate geometry. These experiments were performed by applying a linear viscoelastic strain of 5% at 250 °C. After imposing a step strain, data were collected for a maximum of 10000 seconds (s) depending on the test temperature. The data were then normalized using the modulus value around 0.1 s and plotted with time.

*Example 7 - SSP of PA-6 with TAEA-SA salt cross-linker*

An SSP reaction mixture consisting of PA-6 resin and TAEA-SA salt cross-linker (prepared in Example 1) was prepared cf. the method disclosed in Example 2. The amount of TAEA-SA salt cross-linker relative to the amount of amide bonds in the PA-6 resin was varied from 10 mole% to 20 mole% (see: Table **1**).

After drying, this powder was loaded into a glass SSP reaction vessel and the mixture was subjected to the general conditions for SSP as described in Example 3. Samples were periodically taken and tested for solubility in HFIP. In all cases, the SSP samples taken after 2 hours or more of SSP time were (partially) insoluble in HFIP, indicating the formation of a polymer network.

**Table 1.** Compositions of SSP reaction mixtures and results of solubility test in HFIP.

| Sample | TAEA-SA salt cross-linker (mole %) | Catalyst (mole%) | Appearance of insoluble fraction during SSP? |
|---|---|---|---|
| 4 (see: Comp. Ex. 4) | 0 | 0 | No, not after 24 h of SSP |
| 7-A | 10 | 0 | Yes, after 2 hours of SSP |
| 7-B | 20 | 0 | Yes, after 2 hours of SSP |

DMA was performed on Samples **7-A/B** cf. the experimental method disclosed in Example 5. The resulting DMA traces of storage modulus *versus* temperature are shown in Figure 6-A. Subsequently, stress relaxation measurements were performed on these sample cf. Example 6. The stress relaxation curves, following the decay of modulus *versus* time after applying the strain are shown in Figure 6-B; for comparison the stress relaxation curve of non-cross-linked PA-6 (Entry **4** from Comparative Example 4) is also added.

From analysis of FIG. 6 A/B it is evident that: both Entries **7-A** and **7-B** have formed a cross-linked polymer network composition after 24 hours of SSP as indicated by the presence of a plateau modulus above the melting temperature of PA-6 (*i.e.,* at temperatures above -220 °C) in DMA (Figure 6-A; 7A solid line, 7B dashed line). These observations are in full agreement with solubility tests performed during SSP, where both entries gave insoluble fractions after 2 hours of SSP (Table 1).

It is also evident that both Samples **7-A/B** form dynamically cross-linked polymer network compositions, as indicated by the stress relaxation measurements in FIG. 6B: characteristic relaxation times are in the order of $10^1$ seconds for Entries **7-A** (10 mole% cross-linker, black solid line) and $10^2$ seconds for Entry **7-B** (20 mole% cross-linker, black dashed line) which is in line with the expectations that the latter forms a more densely cross-linked network which results in reduced chain/cross-link mobility. Comparative Example, Entry **4** (control sample: non-cross-linked PA-6, gray solid line) shows the expected stress relaxation behavior of thermoplastics, with complete stress relaxation prior to starting the measurement (*i.e.,* having a characteristic stress relaxation time < $10^{-1}$ second).

*Example 8 - SSP of PA-6 with TAEA-SA salt cross-linker in the presence of catalyst*

An SSP reaction mixture consisting of PA-6 resin, 10 mole% of TAEA-SA salt cross-linker (with respect to the amide bonds in PA-6 and prepared in Example 1) and 5 mole% of catalyst (relative to the amount of amide bonds in PA-6) was prepared cf. the method disclosed in Example 2. Three types of transamidation catalysts were used (see: Table 2), which were selected based on reports in literature: cerium(IV) oxide ($CeO_2$; CAS: 1306-38-3; Sigma-Aldrich, the Netherlands), reported in: [27a] M. Tamura, T. Tonomura, K. Shimizu & A. Satsuma, Green Chem. (2012) 4, 717-724 and [27b] M. Tamura, K. Shimizu & A. Satsuma, Chem. Lett. (2012) 41, 1397-1405; manganese(IV) oxide ($MnO_2$; CAS: 1313-13-9; Sigma-Aldrich, the Netherlands), reported in: [28] S.L. Yedage, D.S. D'silva & B.M. Bhanage, RSC Adv. (2015) 5, 80441-80449; and, aluminum(III) chloride ($AlCl_3$; CAS: 7446-70-0; Sigma-Aldrich, the Netherlands), reported in: [29a] J.M. Hoerter, K.M. Otte, S.H. Gellman & S.S. Stahl, J. Am. Chem. Soc. (2006) 128, 5177-5183; [29b] J.M. Hoerter, K.M. Otte, S.H. Gellman, Q. Cui & S.S. Stahl, J. Am. Chem. Soc. (2008) 130, 647-654; [29c] Y.-Q. Li, Y.-B.

Chen & Z.-Z. Huang, Chin. Chem. Lett. (2014) 25, 1540-1544.

After drying, this powder was loaded into a glass SSP reaction vessel and the mixture was subjected to the general conditions for SSP as described in Example 3. Samples were periodically taken and tested for solubility in HFIP. When $CeO_2$ or $MnO_2$ were used as catalysts, the SSP samples taken after 2 hours or more of SSP time were (partially) insoluble in HFIP, indicating the formation of a polymer network. In contrast, there was no insoluble fraction - even after 24 hours of SSP - when $AlCl_3$ was used as catalyst. Table 2 presents the compositions of the SSP reaction mixtures.

**Table 2.** Compositions of SSP reaction mixtures and results of solubility test in HFIP.

| Sample | TAEA-SA salt cross-linker (mole%) | Catalyst type (mole%) | Appearance of insoluble fraction during SSP? |
|---|---|---|---|
| 8-A | 10 | $CeO_2$ (5) | Yes, after 2 hours of SSP |
| 8-B | 10 | $MnO_2$ (5) | Yes, after 2 hours of SSP |
| 8-C | 10 | $AlCl_3$ (5) | No, not after 24 hours of SSP |

DMA was performed on Samples **8-A/B/C** similar to. the experimental method disclosed in Example 5. The resulting DMA traces of storage modulus *versus* temperature are shown in FIG. 7-A. Sample **8-C** was measured twice: (1) on a sample taken immediately after 24 hours of SSP and (2) on a sample taken after 24 hours of SSP that was subjected first to a curing step at 270 °C for 2 hours before DMA measurement was started. Subsequently, stress relaxation measurements were performed on these sample cf. Example 6. The stress relaxation curves, following the decay of modulus *versus* time after applying the strain are shown in FIG. 7B.

From analysis of Figures 3-A/B it is evident that: entries **8-A** and **8-B** have formed a cross-linked polymer network composition after 24 hours of SSP as indicated by the presence of a plateau modulus above the melting temperature of PA-6 (*i.e.,* at temperatures above -220 °C) in DMA (FIG. 7A; 8A solid line; 8B dashed line; 8C open gray line). It is also apparent that Entry **8-C** has not formed a cross-linked polymer composition during SSP. However, after the curing step at 270 °C, there is a plateau modulus for this composition as well. These observations are in full agreement with solubility tests performed during SSP (Table 2), where Entries **8-A/B** gave an insoluble fraction after 2 hours of SSP, while Entry **8-C** did not.

Clearly, the role of $AlCl_3$ as a transamidation catalyst is different from $CeO_2$ and $MnO_2$. This catalyst may be too inactive to result in appreciable network formation by transamidation at SSP temperatures so that elevated temperatures during a curing step are required to complete the reaction.

All entries **8-A/B/C** form dynamically cross-linked polymer network compositions, as indicated by the stress relaxation measurements in Figure 7-B: characteristic relaxation times are in the order of $10^1$ seconds for Entries **8-A** ($CeO_2$ catalyst) and **8-B** ($MnO_2$) and $10^2$ seconds for Entry **8-C** (with the less active $AlCl_3$ catalyst).

Overall, the effect of adding a catalyst to the PA-6-based DCN formulation is not very pronounced when comparing network dynamics (stress relaxation times) of the non-catalyzed **(7-A/B)** and catalyzed entries **(8-A/B/C).** It will be apparent to those skilled in the art that various modifications and variations can be made in the present disclosure without departing from the scope or spirit of the disclosure. Other aspects of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A method of forming a polymer composition by solid-state modification, comprising:

forming a solid solution that comprises a polyamide component and one or more of (a) a polyammonium salt, (b) a polyamine, (c) a polyacid, or (d) a polycarboxylate salt;

reacting the polyamide component and the one or more of (a) a polyammonium salt, (b) a polyamine, (c) a polyacid, or (d) a polycarboxylate salt, so as to form polyamide polymer chains and to form cross-links among the polyamide polymer chains so as to give rise to a pre-dynamically cross-linked network polymer composition

having at least one amorphous polyamide region and at least one crystalline polyamide region.

2. The method of claim 1, wherein the reacting is performed in the presence of a transamidation catalyst.

3. The method of claim 1, further comprising forming the solid solution by at least one of (1) contacting the polyamide component and the one or more of (a) a polyammonium salt, (b) a polyamine, (c) a polyacid, or (d) a polycarboxylate salt in the presence of a solvent, removing at least a portion of the solvent, and effecting crystallization of at least a portion of the polyamide component or (2) effecting melt-phase mixing and cooling of the polyamide component and the one or more of (a) a polyammonium salt, (b) a polyamine, (c) a polyacid, or (d) a polycarboxylate salt.

4. The method of any of claims 1-3, further comprising including in the pre-dynamically cross-linked network polymer composition at least one of a dye, a filler, a plasticizer, a fiber, a flame retardant, an antioxidant, a lubricant, wood, glass, metal, an ultraviolet agent, an anti-static agent, an anti-microbial agent, or any combination thereof.

5. The method of any of claims 1-4, further comprising curing the pre-dynamically cross-linked network polymer composition at a temperature ranging from the glass transition temperature ($T_g$) to the melting temperature ($T_m$) of the composition.

6. The method of any of claims 1-5, further comprising removing one or more volatile components evolved during the reacting.

7. A method of forming a polymer composition by solid-state modification, comprising:

from a solution that comprises:

a polyamide component and one or more of (a) a polyammonium salt, (b) a polyamine, (c) a polyacid, or (d) a polycarboxylate salt, and optionally a transamidation catalyst,

forming, from the solution, a solid that comprises an amount of the polyamide component in at least partially crystalline particulate form, the (a) a polyammonium salt, (b) a polyamine, (c) a polyacid, or (d) a polycarboxylate salt and the optional transamidation catalyst;
heating the solid at a temperature between the $T_g$ and $T_m$ of the polyamide component in at least partially crystalline particulate form so as to form a dynamically cross-linked network polymer composition or a pre-dynamically cross-linked network polymer composition.

8. The method of claim 7, further comprising application of an inert gas to the solution, to the solid, or to both.

9. The method of any of claims 7-8, further comprising removing one or more volatile components.

10. The method of any of claims 7-9, further comprising grinding at least part of the solid so as to place that solid into particulate form.

11. The method of any of claims 7-10, further comprising curing the pre-dynamically cross-linked network polymer composition at a temperature from the $T_g$ to the $T_m$ of the composition.

12. A dynamically cross-linked network polymer composition, comprising:

a polyamide that comprises a plurality of crystalline regions bound to amorphous regions,
at least some of the amorphous regions being cross-linked by cross-links that comprise a reacted (a) a polyammonium salt, (b) a polyamine, (c) a polyacid, or (d) a polycarboxylate salt component.

13. The dynamically cross-linked network polymer composition of claim 12, wherein the composition is made according to any of claims 1-11.

14. The dynamically crosslinked network polymer composition of any of claims 12-13, wherein the polyamide comprises polyamide-6 (polyamide 6), and polyamide-6,6 (polyamide 6,6), polyamide-4, polyamide-4,6 (polyamide 46), polyamide-12, polyamide-6,9, polyamide-6,12, polyamide-9T, copolymer of polyamide-6,6 and polyamide-6, polyamide-6,10 (polyamide 6,10), polyamide 11 (polyamide 11), polyamide 12 (polyamide 12), polyamide 6-3-T (polyamide

6-3-T), polyarylamid (polyamide MXD 6), polyphthalamide (PPA), poly-ether-block amide, or any combination thereof.

**15.** The dynamically cross-linked network polymer composition of any of claims 12-14, wherein the composition defines a molded article.

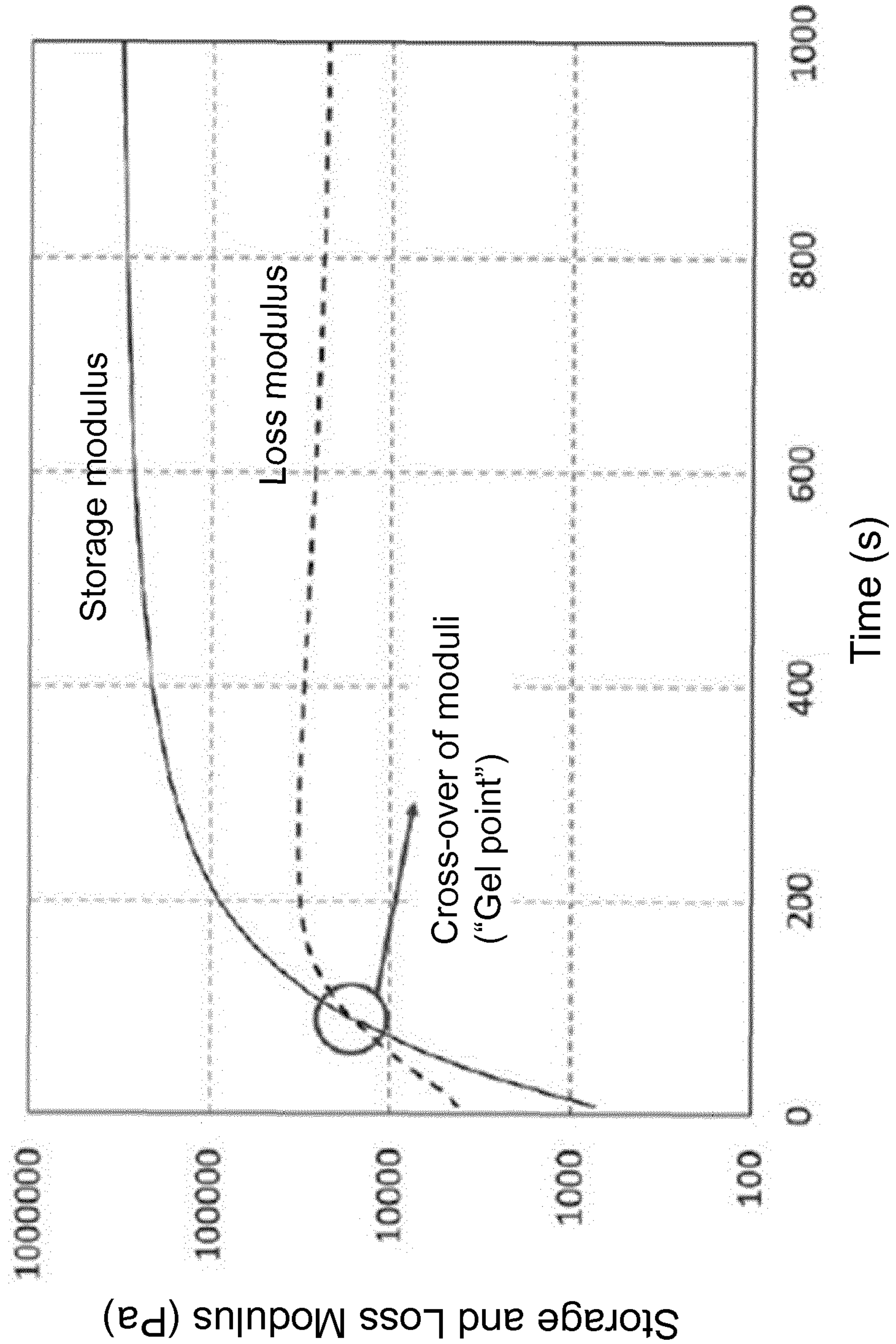
Storage modulus
Loss modulus
Cross-over of moduli
("Gel point")
1000000
100000
10000
1000
100
Storage and Loss Modulus (Pa)
0
200
400
600
800
1000
Time (s)

FIG. 1

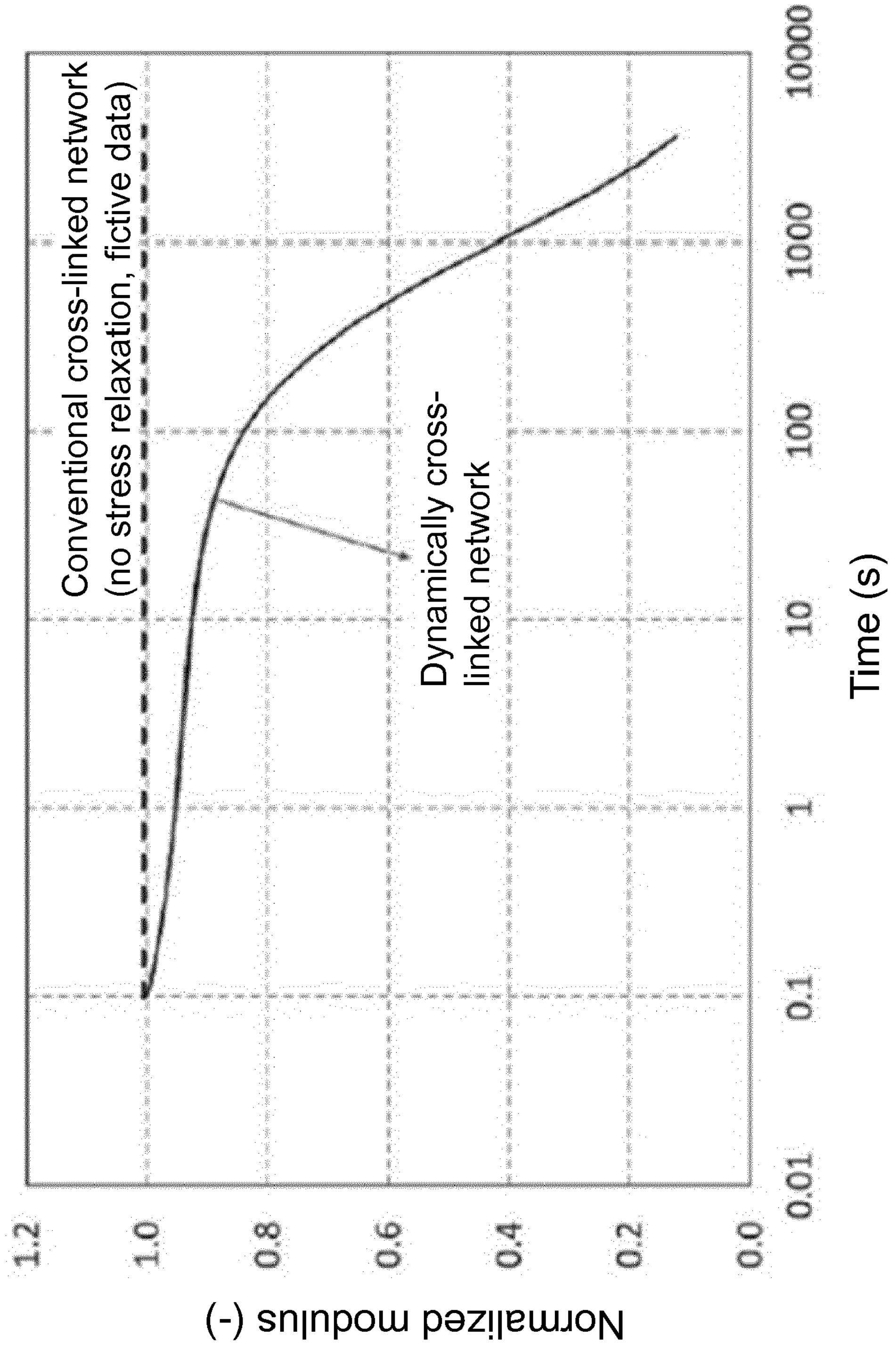
Normalized modulus (-)
1.2
1.0
0.8
0.6
0.4
0.2
0.0
0.01
0.1
1
10
100
1000
10000
Time (s)
Conventional cross-linked network (no stress relaxation, fictive data)
Dynamically cross-linked network

FIG. 2

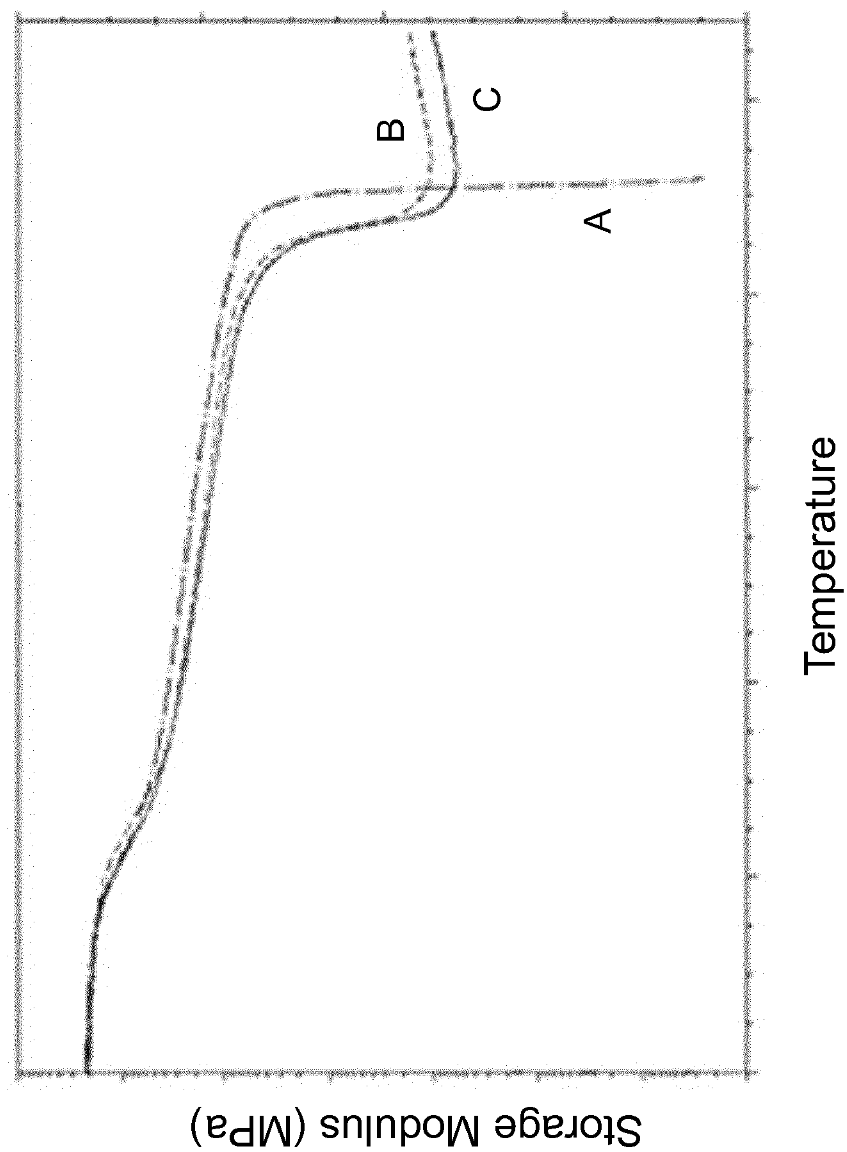


FIG. 3

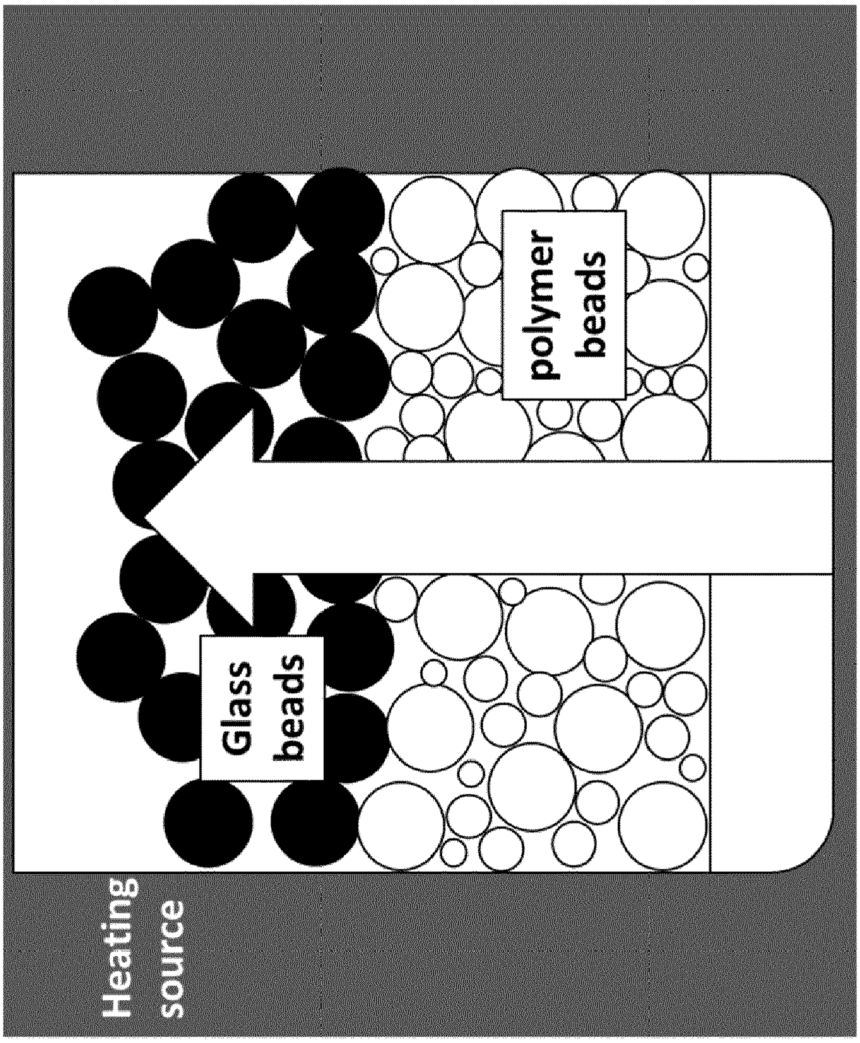


FIG. 4

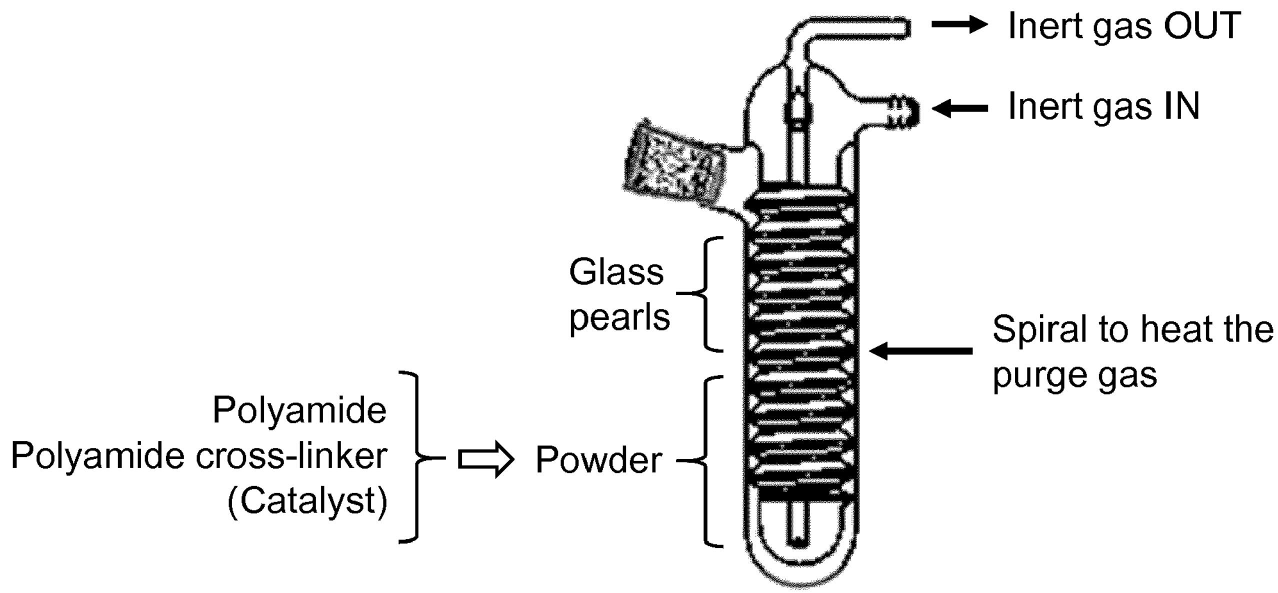
Inert gas OUT
Inert gas IN
Glass pearls
Spiral to heat the purge gas
Polyamide
Polyamide cross-linker
(Catalyst)
Powder

FIG. 5

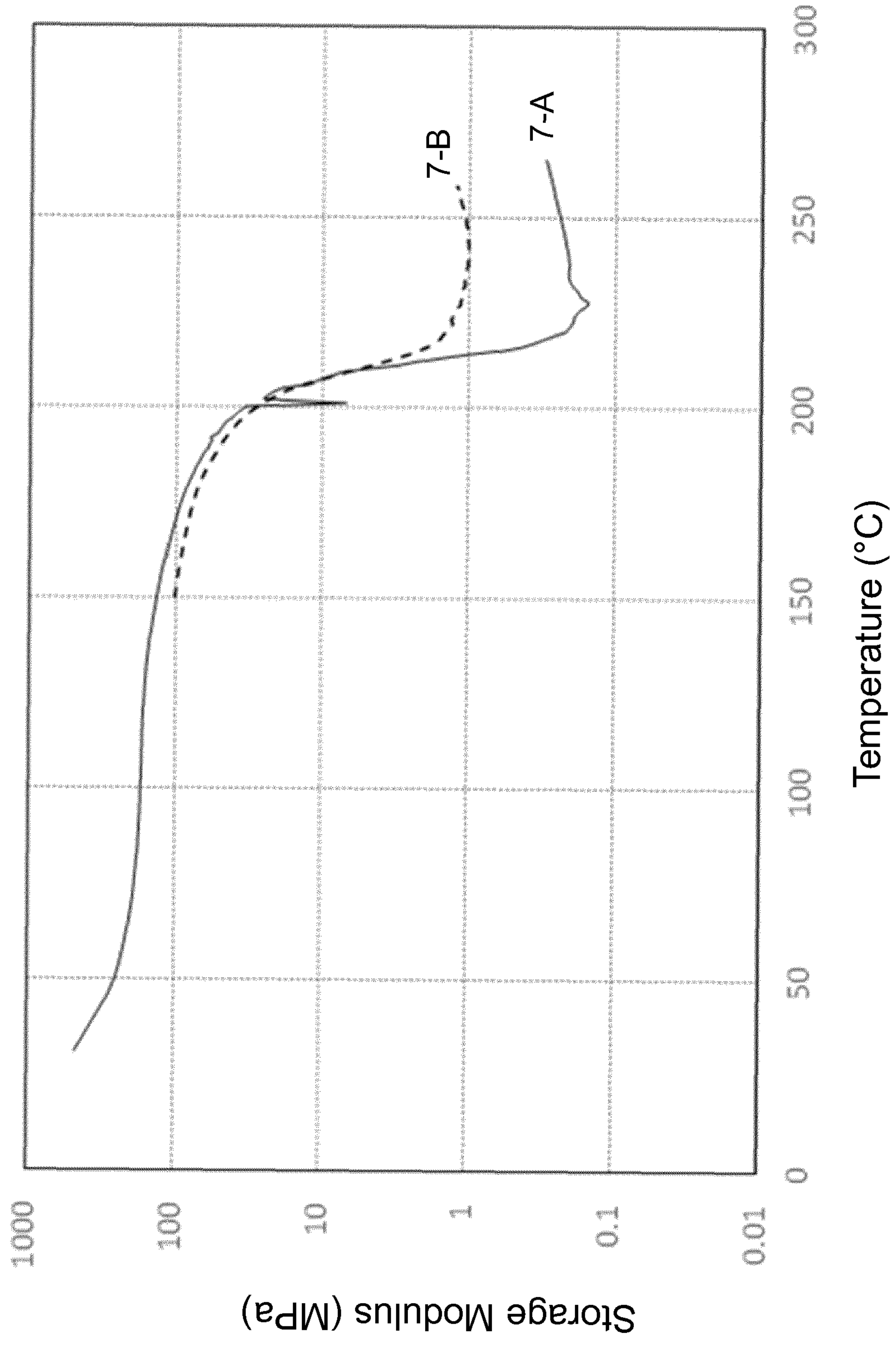
Storage Modulus (MPa)
1000
100
10
1
0.1
0.01
0
50
100
150
200
250
300
Temperature (°C)
7-A
7-B

FIG. 6A

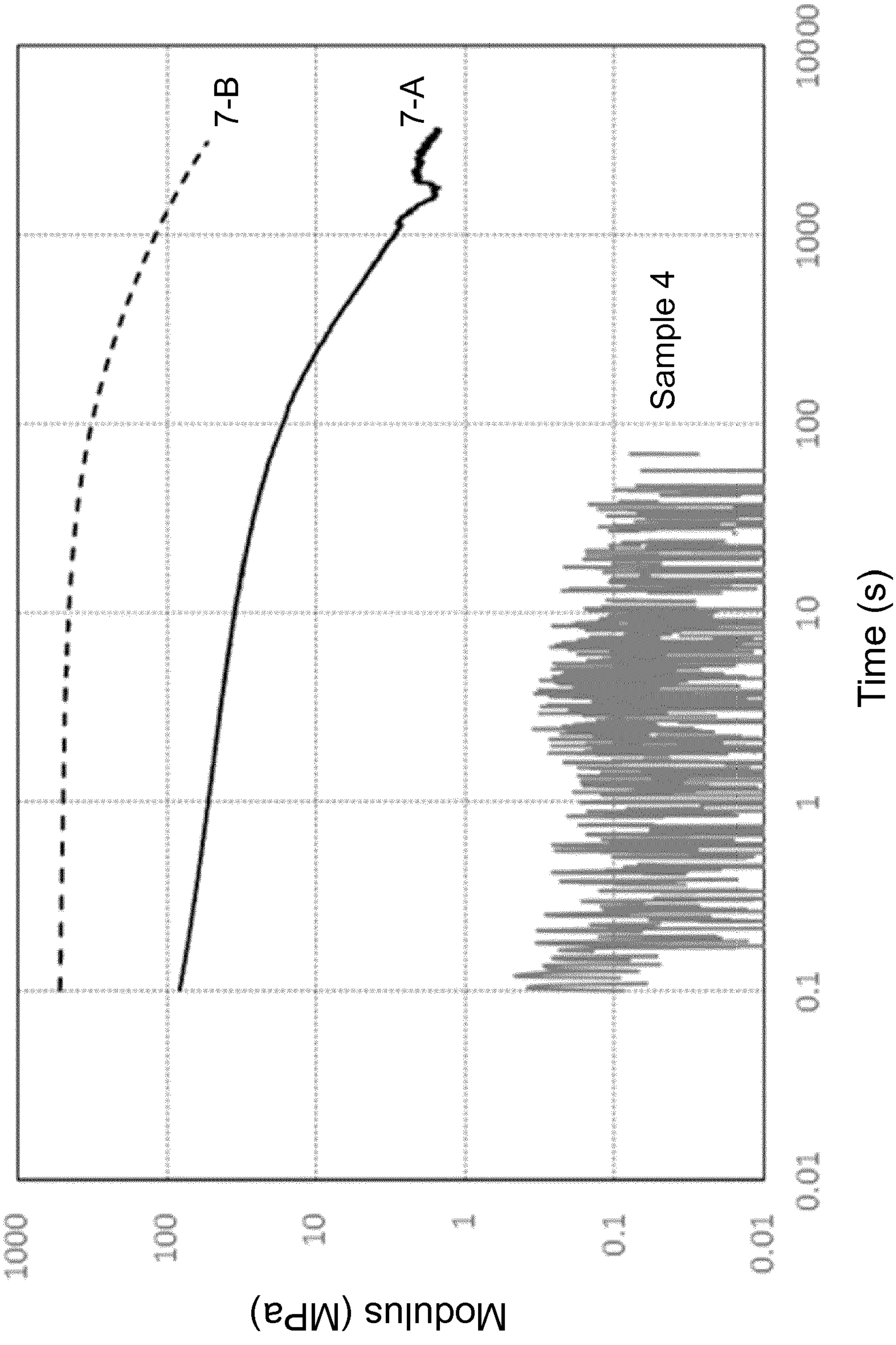

Modulus (MPa)
1000
100
10
1
0.1
0.01
0.01
0.1
1
10
100
1000
10000
Time (s)
7-B
7-A
Sample 4


FIG. 6B

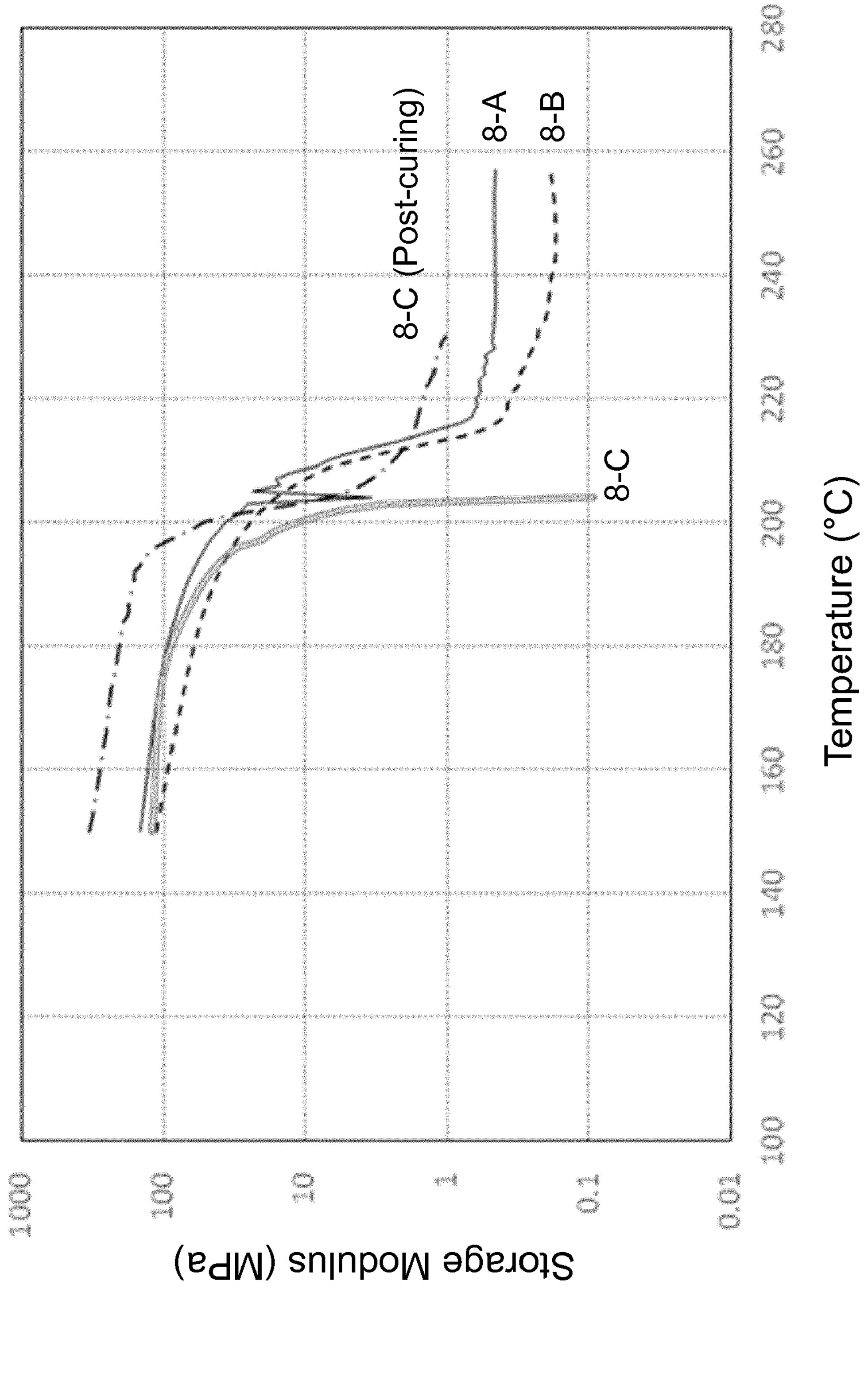
Storage Modulus (MPa)
1000
100
10
1
0.1
0.01
Temperature (°C)
100
120
140
160
180
200
220
240
260
280
8-C (Post-curing)
8-A
8-B
8-C

FIG. 7A

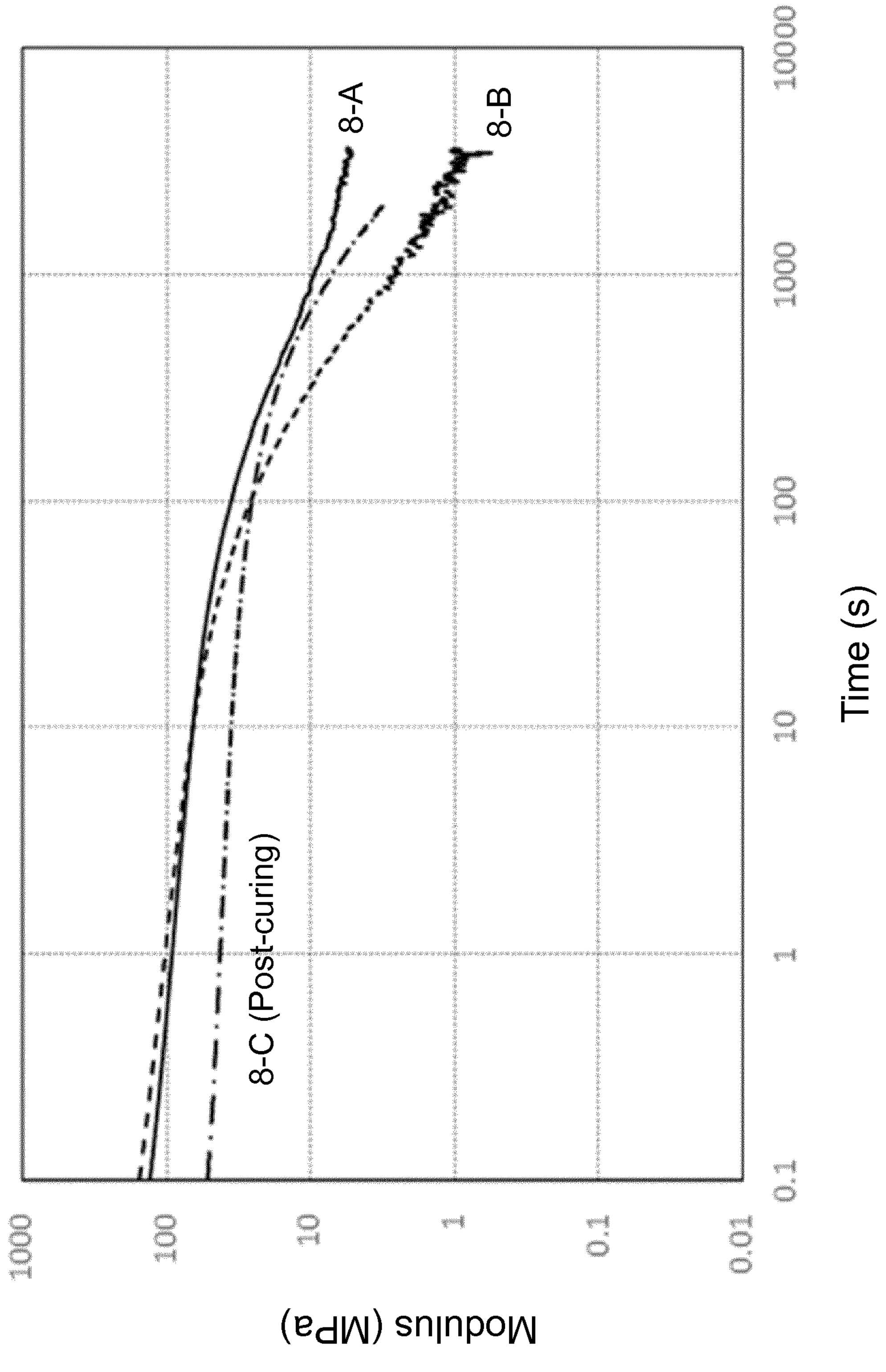
Modulus (MPa)
1000
100
10
1
0.1
0.01
Time (s)
0.1
1
10
100
1000
10000
8-A
8-B
8-C (Post-curing)

FIG. 7B

Europäisches Patentamt
European Patent Office
Office européen des brevets

# EUROPEAN SEARCH REPORT

Application Number
EP 18 15 2272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 345 648 A2 (INVENTA AG [CH]) 13 December 1989 (1989-12-13) * claims 3, 6, 11, 12, 15 * * page 28, line 4 - line 29 * * page 26, line 17 - line 22 * * page 31, line 24 - line 25 * * page 13, line 33 - page 14, line 33 * * examples * ----- | 1-15 | INV. C08G69/48 C08G69/36 |
| X | WO 2014/086974 A1 (ESPCI INNOV [FR]) 12 June 2014 (2014-06-12) * claims 1, 20 * * examples; tables 1, 2 * * page 2, line 54 - page 3, line 25 * * page 2, line 28 - line 38 * ----- | 12-15 | |
| X | DE 27 32 329 A1 (BASF AG) 1 February 1979 (1979-02-01) * claim 1 * ----- | 12-14 | |
| X | EP 3 078 701 A1 (MITSUI CHEMICALS INC [JP]) 12 October 2016 (2016-10-12) * claims 8, 11 * * example 1A * ----- | 12-15 | TECHNICAL FIELDS SEARCHED (IPC) C08G |
| A,D | WO 2016/009392 A1 (SABIC GLOBAL TECHNOLOGIES BV [NL]) 21 January 2016 (2016-01-21) * claims 1, 8, 10-13, 18, 19 * * examples * * figures 5-14 * ----- | 1-15 | |

The present search report has been drawn up for all claims

3

| Place of search | Date of completion of the search | Examiner |
|---|---|---|
| Munich | 11 June 2018 | Mader, Margarita |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 15 2272

This annex lists the patent family members relating to the patent documents cited in the above-mentioned European search report. The members are as contained in the European Patent Office EDP file on
The European Patent Office is in no way liable for these particulars which are merely given for the purpose of information.

11-06-2018

| Patent document cited in search report | Publication date | Patent family member(s) | Publication date |
|---|---|---|---|
| EP 0345648 A2 | 13-12-1989 | DE 3917927 A1 | 14-12-1989 |
| | | EP 0345648 A2 | 13-12-1989 |
| | | ES 2076172 T3 | 01-11-1995 |
| | | JP 3084284 B2 | 04-09-2000 |
| | | JP H0264128 A | 05-03-1990 |
| WO 2014086974 A1 | 12-06-2014 | CN 104955879 A | 30-09-2015 |
| | | EP 2740755 A1 | 11-06-2014 |
| | | EP 2928945 A1 | 14-10-2015 |
| | | JP 2015537101 A | 24-12-2015 |
| | | US 2015315344 A1 | 05-11-2015 |
| | | WO 2014086974 A1 | 12-06-2014 |
| DE 2732329 A1 | 01-02-1979 | DE 2732329 A1 | 01-02-1979 |
| | | DK 315778 A | 17-01-1979 |
| | | EP 0000363 A1 | 24-01-1979 |
| | | IT 1105250 B | 28-10-1985 |
| | | JP S5420096 A | 15-02-1979 |
| EP 3078701 A1 | 12-10-2016 | CN 105899586 A | 24-08-2016 |
| | | EP 3078701 A1 | 12-10-2016 |
| | | JP WO2015083819 A1 | 16-03-2017 |
| | | KR 20160094402 A | 09-08-2016 |
| | | US 2017283556 A1 | 05-10-2017 |
| | | WO 2015083819 A1 | 11-06-2015 |
| WO 2016009392 A1 | 21-01-2016 | CN 106795274 A | 31-05-2017 |
| | | EP 3169717 A1 | 24-05-2017 |
| | | US 2017218192 A1 | 03-08-2017 |
| | | WO 2016009392 A1 | 21-01-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110319524 A
- WO 2012152859 A
- WO 2014086974 A
- US 2071250 A
- US 2071251 A
- US 2130523 A
- US 2130948 A
- US 2241322 A
- US 2312966 A
- US 2512606 A
- US 62026458 A
- US 62026465 B
- US 62138465 B
- US 62138807 B
- US 62026454 B


### Non-patent literature cited in the description


- **D. MONTARNAL et al.** *Science,* 2011, vol. 334, 965-968
- **J.P. BRUTMAN et al.** *ACS Macro Lett.,* 2014, vol. 3, 607-610
- **PAPASPYRIDIS.** Solid State Polymerization. 2009
- **C. LIANA ALLEN.** *Ang. Chem. Int. Ed,* vol. 51 (6), 1383-1386
- *RSC Adv.,* 2015, vol. 5, 10567-10574
- *CHEMICAL ABSTRACTS,* 111-20-6
- *CHEMICAL ABSTRACTS,* 64-17-5
- *CHEMICAL ABSTRACTS,* 4097-89-6
- *CHEMICAL ABSTRACTS,* 25038-54-4
- *CHEMICAL ABSTRACTS,* 920-66-1
- *CHEMICAL ABSTRACTS,* 1306-38-3
- **M. TAMURA ; T. TONOMURA ; K. SHIMIZU ; A. SATSUMA.** *Green Chem.,* 2012, vol. 4, 717-724
- **M. TAMURA ; K. SHIMIZU ; A. SATSUMA.** *Chem. Lett.,* 2012, vol. 41, 1397-1405
- *CHEMICAL ABSTRACTS,* 1313-13-9
- **S.L. YEDAGE ; D.S. D'SILVA ; B.M. BHANAGE.** *RSC Adv.,* 2015, vol. 5, 80441-80449
- *CHEMICAL ABSTRACTS,* 7446-70-0
- **J.M. HOERTER ; K.M. OTTE ; S.H. GELLMAN ; S.S. STAHL.** *J. Am. Chem. Soc.,* 2006, vol. 128, 5177-5183
- **J.M. HOERTER ; K.M. OTTE ; S.H. GELLMAN ; Q. CUI ; S.S. STAHL.** *J. Am. Chem. Soc.,* 2008, vol. 130, 647-654
- **Y.-Q. LI ; Y.-B. CHEN ; Z.-Z. HUANG.** *Chin. Chem. Lett.,* 2014, vol. 25, 1540-1544